# EUROPEAN PATENT SPECIFICATION

(11) **EP 2 241 440 B1**
(45) Date of publication and mention of the grant of the patent: **29.05.2013**
(21) Application number: 10153463.4
(22) Date of filing: 12.02.2010
(51) Int. Cl.: B32B 33/00, A41D 31/00, A62D 5/00, B32B 27/00

(54) **Article acting as a barrier to noxious agents, laminate and associated production method**
Artikel mit Schadstoffbarrierefunktion, Laminat und dazugehöriges Herstellungsverfahren
Article agissant comme barrière contre des agents nocifs, laminé et méthode de production associée

(30) Priority: 14.04.2009 US 423082
(43) Date of publication of application: 20.10.2010
(73) Proprietor: General Electric Company, Schenectady, NY 12345 (US)
(72) Inventor: Stone, Joshua James, Worcester, NY 12197 (US); Davis, Gary Charles, Albany, NY 12205 (US); Hutchinson, Ryan Austin, Albany, NY 12203 (US); Bansal, Vishal, Overland Park, KS 66223 (US); Palmer, Eric Clark, Richmond, VA 23235 (US)
(74) Representative: Szary, Anne Catherine

(56) References cited:
- EP-A2- 1 700 620
- WO-A1-2008/076097
- KEIZO OGINO ET AL: 'Reduction of Surface Tension by Novel Polymer Surfactants' LANGMUIR, [Online] 31 July 1990, pages 1330 - 1330, XP055012762 DOI: 10.1021/la00097a025 Retrieved from the Internet: <URL:http://pubs.acs.org/doi/pdf/10.1021/la 00097a025> [retrieved on 2011-11-22]

## Description

### BACKGROUND

Membranes with high porosity, chemical resistance, and having selective permeability to chemical or biological agents are useful in high performance applications, such as in the manufacture of protective covers, shelters, including tents, or garments that provide protection against chemical, biological, radiological and/or microbial agents. In addition to their protective properties, such protective equipment is also desirably easy to transport or use and/or comfortable to wear in a variety of environments, and while undertaking a variety of activities.

Expanded polytetrafluoroethylene (ePTFE) has been used as a selectively permeable membrane in applications wherein chemical and/or temperature resistance, or high airflow through the membrane, is/are desired or required. However, currently commercially available selectively permeable protection systems based on ePTFE typically are treated with materials, or layers of materials to provide the garments with their protective properties. Typically, these materials may be hydrophilic, so that when exposed to liquid water (such as during wash cycles, or when utilized wet environments), they may absorb moisture and become less durable. Further, when such materials are provided as laminates with other materials to provide a multiplicity of desired properties, this water absorption can result in delamination.

It would thus be desirable to provide highly effective protective articles, and due to its many advantageous properties protective articles based upon ePTFE, that are not only effective against a broad spectrum of possible exposure venues, but also, are more durable and/or resistant to delamination from other membranes that may desirably be laminated thereto. Such protective articles would yet desirably substantially maintain their moisture vapor transport rate. The ability to produce such articles with current methods of production, or even less complicated methods of production than those currently available, may also assist in the provision of such articles.

EP-A-1 700 620 discloses a composition adapted to act as a barrier against harmful or noxious agents comprising from 5 to 80% by weight of polyvinyl acetate polymer or copolymer, from 5 to 20% by weight of an aliphatic amine, from 0 to 20% of a polyvinyl alcohol or copolymer thereof, from 0.1 to 10% by weight of a surfactant, from 0 to 5% by weight of one or more metal salts or metal oxides, from 0.1 to 10% by weight of an epoxy resin or of a cross-linking agent from 0.5 to 10% by weight of a defoamer agent and from 10 to 90% by weight of water. Also disclosed is a process for the preparation of laminated support comprising: a) applying the composition to a selected support to form a laminated support; and b) curing the resulting laminated support at a temperature in the range of 100 to 220° C.

WO 2008/076097 discloses a laminate prepared in part from a continuous acid polysaccharide film. The laminate is useful for fabrication as a protective article as it typically is largely impermeable to hazardous chemical and biological agents, but it is sufficiently permeable to water vapor that, it is both protective and comfortable to wear.

### BRIEF DESCRIPTION

In one embodiment, an article according to claim 1 is provided. The article includes a porous membrane, a first selectively permeable coating supported by the membrane and comprising an effective amount of an antichemical, antibiological, antiradiological and/or antimicrobial agent, and a component protective against delamination of the selectively permeable coating from the porous membrane and/or any other coating(s) applied thereto.

In another embodiment, a laminate is provided. The laminate comprises an article including a porous membrane, a first selectively permeable coating supported by the membrane comprising an effective amount of an antimicrobial and/or anti-chembio agent, a component protective against delamination of the selectively permeable coating from the porous membrane and/or any other coating(s) applied thereto, and at least one additional membrane. An apparel item comprising the laminate is also provided.

In yet another embodiment, a method according to claim 1 is provided. The method comprises applying to a porous membrane (i) a first selectively permeable coating comprising an effective amount of an antichemical, antibiological, antiradiological, and/or antimicrobial agent, and (ii) a component protective against delamination of the first selectively permeable coating from the porous membrane and/or any other coatings applied thereto.

### DRAWINGS

These and other features, aspects, and advantages of the present invention will become better understood when the following detailed description is read with reference to the accompanying drawings in which like characters represent like parts throughout the drawings, wherein:
FIG. 1 shows a cross-section of an article in accordance with one embodiment of the invention;
FIG.2 shows a cross-section of an article in accordance with one embodiment of the invention;
FIG.3 shows a cross-section of an article in accordance with one embodiment of the invention;
FIG.4 shows a cross-section of a laminate in accordance with one embodiment of the invention;
FIG.5 shows a cross-section of a laminate in accordance with one embodiment of the invention;
FIG.6 shows a cross-section of a laminate in accordance with one embodiment of the invention;
FIG.7 shows a cross-section of a laminate in accordance with one embodiment of the invention; and
FIG.8 shows a cross-section of a laminate in accordance with one embodiment of the invention.

### DETAILED DESCRIPTION

In the following specification and the clauses which follow, reference will be made to a number of terms having the following meanings. The singular forms "a", "an" and "the" include plural referents unless the context clearly dictates otherwise. Approximating language, as used herein throughout the specification and clauses, may be applied to modify any quantitative representation that could permissibly vary without resulting in a change in the basic function to which it is related. Accordingly, a value modified by a term such as "about" is not to be limited to the precise value specified. In some instances, the approximating language may correspond to the precision of an instrument for measuring the value. Similarly, "free" may be used in combination with a term, and may include an insubstantial number, or trace amounts, while still being considered free of the modified term.

As used herein, the terms "may" and "may be" indicate a possibility of an occurrence within a set of circumstances; a possession of a specified property, characteristic or function; and/or qualify another verb by expressing one or more of an ability, capability, or possibility associated with the qualified verb. Accordingly, usage of "may" and "may be" indicates that a modified term is apparently appropriate, capable, or suitable for an indicated capacity, function, or usage, while taking into account that in some circumstances the modified term may sometimes not be appropriate, capable, or suitable. For example, in some circumstances an event or capacity can be expected, while in other circumstances the event or capacity cannot occur - this distinction is captured by the terms "may" and "may be".

The invention includes embodiments that relate to articles comprising a porous membrane supportive of at least a first selectively permeable coating and a component protective against delamination of the selectively permeable coating from the porous membrane and/or any other coatings applied thereto. Laminates and apparel items comprising the article are also provided, as are methods of providing the articles.

In one embodiment, an article according to claim 1 is provided. An article includes a porous membrane, a first selectively permeable coating supported by the membrane, and a component protective against delamination of the selectively permeable coating from the porous membrane and/or any other coatings applied thereto. The first selectively permeable coating comprises at least one antichemical, antibiological, antiradiological and/or antimicrobial agent in an amount that is sufficient to inactivate, or reduce the activity of, a chemical, biological, radiological or microbial agent, or to slow the migration of a chemical, biological, or microbial agent through the article. The component can be an element of the first selectively permeable coating, or can be provided as an element of a second selectively permeable coating. The protective component comprises an organic polymer.

Since the first selectively permeable coating can desirably be hydrophilic, the protective component may advantageously be hydrophilic as well, but preferably less hydrophilic than the first selectively permeable coating.

It has now been discovered that the use of certain treatments in preparing membranes such as those described herein can render the membranes hydrophilic. When exposed to liquid water (such as during wash cycles, or when used in wet environments) these treatments can absorb moisture, thereby potentially rendering any bond between the membrane and other layers or membranes laminated thereto more subject to delamination. More particularly, when such treated membranes are laminated with other components/membranes, the lamination adhesive may be exposed to any absorbed water, and delamination can result. The use of the component protective against delamination allows the first selectively permeable layer and underlying membrane to substantially maintain their moisture vapor transport rate, while protecting a laminate comprising the membrane from delamination upon exposure to liquid water, or water vapor. The article of the present invention, comprising the membrane, a first selectively permeable layer and a component protective against delamination allows each individual layer utilized in the membrane, article, or laminates comprising the same to substantially maintain its own specific properties without compromise.

The protective component may comprise any material less hydrophilic than the first selectively permeable layer, and thus, capable of reducing the amount of moisture that reaches the first selectively permeable layer. Less moisture will thus be available for absorption by the first selectively permeable layer. Desirably, the material chosen for the protective component will allow the membrane and first selectively permeable layer to substantially maintain the moisture vapor transport rate there through, while protecting the membrane and first selectively permeable layer, and/or any other coatings applied thereto, against delamination.

In certain embodiments, the component protective against delamination can be a component of the first selectively permeable coating, and in others, may be an element, or comprise the entirety of, a second selectively permeable coating. That is, some components protective against delamination may also exhibit activity against chemical, biological, radiological and/or microbial agents, and be capable of application to the porous membrane. In these embodiments, less material and manufacturing equipment and time may be required to provide the articles described herein.

Organic polymers are used as the protective component including one or more polyurethanes, polyallyamines, polyvinylamines, polyvinylalcohols, or copolymers or blends of these. In certain embodiments, the second selectively permeable coating comprises a copolymer of one or more polyvinylalcohols and one or more polyvinylamines.

In an embodiment, a protective component may include a polyvinyl nucleophilic polymer and one or both of a blocked isocyanate or a urethane. A blocked isocyanate or a urethane may function as a curing agent for the polyvinyl nucleophilic polymer. In one embodiment, the polyvinyl nucleophilic polymer may include one or both of polyvinyl alcohol or polyvinyl amine. In one embodiment, the polyvinyl nucleophilic polymer may essentially include polyvinyl amine.

Suitable polyvinyl nucleophilic polymers may include those polyvinyl nucleophilic polymers having a molecular weight in a predetermined range of monomeric units. In one embodiment, the polyvinyl nucleophilic polymer molecular weight may be less than 2500. In one embodiment, the polyvinyl nucleophilic polymer molecular weight may be greater than 2500. In one embodiment, the polyvinyl nucleophilic polymer molecular weight may be in a range of from about 2500 to about 31,000, from about 31,000 to about 50,000, from about 50,000 to about 100,000, from about 100,000 to about 200,000 or greater than about 200,000.

Suitable blocked isocyanates may include a blocking agent, and one or more of aromatic polyisocyanates, aliphatic polyisocyanates, or cycloaliphatic polyisocyanates. In one embodiment, the polyisocyanates may include one or more of toluene diisocyanate, diphenyl methane diisocyanate, hexamethylene diisocyanate, methylene bis-(4-cyclohexylisocyanate), naphthalene di-isocyanate, polymethylene polyphenyl isocyanate, meta-tetramethylxylene diisocyanate, or dimethyl metaisopropenyl benzyl isocyanate.

Suitable blocked isocyanates may be commercially available, or may be formed from, for example, a reaction of an isocyanate with a blocking agent, such as malonic ester. Other suitable blocking agents may include one or more amines, such as diisopropyl amine (DIPA) or t-butyl benzyl amine (BEBA). Yet other suitable blocking agents may include one or more of 3,5-dimethyl pyrazole; methyl ethyl ketoxime; caprolactam; or alkylated phenol.

Some blocking agents may unblock in response to the application of heat. For example, 3,5-dimethyl pyrazole may unblock at 110°C; methyl ethyl ketoxime may unblock at 150°C; malonic acid esters may unblock at 90°C; caprolactam may unblock at 160°C; and alkylated phenol may unblock at greater than about 110°C. Optional accelerators, when present, may decrease the unblocking temperature to as low as about room temperature.

In one embodiment, the blocked isocyanate may include hexamethylene di-isocyanate or methylene bis-(4-cyclohexyl isocyanate). In one embodiment, the blocked isocyanate may comprise a blocking agent and hexamethylene di-isocyanate. In one embodiment, the blocked isocyanate may comprise a blocking agent and methylene bis-(4-cyclohexyl isocyanate). Another suitable isocyanate may include a reactive triazine having at least one isocyanate functional group.

Suitable urethanes may include one or both of urethane materials or blocked isocyanates. In one embodiment, a urethane may include a triazine having at least one urethane functional group. Ammonium salts or amines (such as 4-dimethyl aminopyridine) may be used to accelerate urethane curing, which may be otherwise performed at, for example, about 100°C to about 110°C. In one embodiment, about 0.5 weight percent of dodecyl benzene sulfonic acid may be added to improve hydrolytic stability and/or hardness.

Suitable amounts of blocked isocyanate or urethane may be greater than about 1 weight percent of the hydrophilic coating. In one embodiment, the amount of blocked isocyanate or urethane present may be in a range of from about 1 weight percent to about 5 weight percent, from about 5 weight percent to about 10 weight percent, from about 10 weight percent to about 15 weight percent, from about 15 weight percent to about 20 weight percent, from about 20 weight percent to about 25 weight percent, or up to about 30 weight percent based on the total weight of the hydrophilic coating.

Suitable porous membranes for use in the articles described herein may include one or more of polyalkylene, polyarylene, polyamide, polyester, polysulfone, polyether, polyacrylic, polystyrene, polyurethane, polyarylate, polyimide, polycarbonate, polysiloxane, polyphenylene oxide, cellulosic polymer, or substituted derivatives thereof. In some embodiments, the membrane includes a biocompatible material or a biodegradable material, such as aliphatic polyesters, polypeptides and other naturally occurring polymers.

In one embodiment, the porous membrane may comprise a fluorinated polymer. As used herein, the phrase "fluorinated polymer" refers to a polymer in which some or all of the hydrogen atoms are replaced by fluorine. In one embodiment, the membrane may comprise a fluorinated polyolefin. As used herein, the term "fluorinated polyolefin" refers to a fluorinated polymer derived from one or more fluorinated polymer precursors containing ethylenic unsaturation. A suitable fluorinated polymer precursor may be a partially fluorinated olefin which may include other substituents, e.g. chlorine or hydrogen. A suitable fluorinated polymer precursor may be a straight or branched chain compound having a terminal ethylenic double bond. In one embodiment, a suitable polymer precursor may include one or more of hexafluoropropylene, pentafluoropropylene, tetrafluoroethylene, vinylidine fluoride, or perfluoroalkyl vinyl ethers, for example, perfluoro (methyl vinyl ether) or (propyl vinyl ether).

In one embodiment, a fluorinated polyolefin essentially includes one or both of polyvinylidene fluoride or polytetrafluoroethylene. In one embodiment, a fluorinated polyolefin essentially includes expanded polytetrafluoroethylene (ePTFE). Suitable ePTFE membranes include those commercially obtainable from General Electric Energy (Kansas City, Missouri).

In one embodiment, the porous membrane may be made by extruding a mixture of fine powder particles and lubricant. The extrudate subsequently may be calendered. The calendered extrudate may be "expanded" or stretched in one or more directions, to form fibrils connecting nodes to define a three-dimensional matrix or lattice type of structure. "Expanded" means stretched beyond the elastic limit of the material to introduce permanent set or elongation to fibrils. The membrane may be heated or "sintered" to reduce and minimize residual stress in the membrane by changing portions of the membrane material from a crystalline state to an amorphous state. In one embodiment, the membrane may be unsintered or partially sintered as is appropriate for the contemplated end use of the membrane. In one embodiment, the membrane may define many interconnected pores that fluidly communicate with environments adjacent to the opposite facing major sides of the membrane.

Other materials and methods may be used to form the membrane having an open pore structure. The membrane may be rendered permeable by, for example, one or more of perforating, stretching, expanding, bubbling, precipitating or extracting the base membrane. Suitable methods of making the membrane include foaming, skiving or casting any of the suitable materials. In alternate embodiments, the membrane may be formed from woven or non-woven fibers.

In certain embodiments, the membrane may be provided with relatively continuous pores. Whether relatively continuous and/or substantially discontinuous, suitable porosities of the membrane may be in a range of greater than about 10 percent by volume. In one embodiment, the porosity may be in a range of from about 10 percent to about 20 percent, from about 20 percent to about 30 percent, from about 30 percent to about 40 percent, from about 40 percent to about 50 percent, from about 50 percent to about 60 percent, from about 60 percent to about 70 percent, from about 70 percent to about 80 percent, from about 80 percent to about 90 percent, or greater than about 90 percent by volume. Here and throughout the specification and claims, range limitations may be combined and/or interchanged. Such ranges are identified by their range limitations, and include all the sub-ranges therebetween.

The pore diameter of the pores within the membrane may be uniform from pore to pore, and/or the pores may define a predetermined pattern. Alternatively, the pore diameter may differ from pore to pore, and/or the pores may define an irregular pattern. Suitable pore diameters may be less than about 500 micrometers. In one embodiment, an average pore diameter may be in a range of from about 1 micrometer to about 10 micrometers, from about 10 micrometers to about 50 micrometers, from about 50 micrometers to about 100 micrometers, from about 100 micrometers to about 250 micrometers, or from about 250 micrometers to about 500 micrometers. In one embodiment, the average pore diameter may be less than about 1 nanometer, in a range of from about 1 nanometer to about 50 nanometers, from about 50 nanometers to about 0.1 micrometers, from about 0.1 micrometers to about 0.5 micrometers, or from about 0.5 micrometers to about 1 micrometer. In one embodiment, the average pore diameter may be less than about 1 nanometer. In one embodiment, the pores may essentially have an average pore diameter in a range of from about 10 nanometers to about 10 micrometers.

The average effective pore size of pores in the membrane may be in the micrometer range. In other embodiments, the average effective pore size of pores in the membrane may be in the nanometer range. A suitable average effective pore size for pores in the membrane may be in a range of from about 0.01 micrometers to about 0.1 micrometers, from about 0.1 micrometers to about 5 micrometers, from about 5 micrometers to about 10 micrometers, or greater than about 10 micrometers.

In one embodiment, the membrane may be a three-dimensional matrix or have a lattice type structure including plurality of nodes interconnected by a plurality of fibrils. Surfaces of the nodes and fibrils may define a plurality of pores in the membrane. The size of a fibril may be in a range of from about 0.05 micrometers to about 0.5 micrometers in diameter taken in a direction normal to the longitudinal axis of the fibril. The specific surface area of the membrane may be in a range of from about 9 square meters per gram of membrane material to about 110 square meters per gram of membrane material.

Membranes according to embodiments of the invention may have differing dimensions, some selected with reference to application-specific criteria. In one embodiment, the membrane may have a thickness in the direction of fluid flow in a range of less than about 10 micrometers. In another embodiment, the membrane may have a thickness in the direction of fluid flow in a range of greater than about 10 micrometers, for example, in a range of from about 10 micrometers to about 100 micrometers, from about 100 micrometers to about 1 millimeter, from about 1 millimeter to about 5 millimeters, or greater than about 5 millimeters. In one embodiment, the membrane may have an average thickness in a range of from about 0.0005 inches (12.7 micrometers) to about 0.005 inches (127 micrometers). In one embodiment, the membrane may be formed from a plurality of layers of the same, or differing, thickness.

Perpendicular to the direction of fluid flow, the membrane may have a width of greater than about 10 millimeters. In one embodiment, the membrane may have a width in a range of from about 10 millimeters to about 45 millimeters, from about 45 millimeters to about 50 millimeters, from about 50 millimeters to about 10 centimeters, from about 10 centimeters to about 100 centimeters, from about 100 centimeters to about 500 centimeters, from about 500 centimeters to about 1 meter, or greater than about 1 meter. The width may be a diameter of a circular area, or may be the distance to the nearest peripheral edge of a polygonal area. In one embodiment, the membrane may be rectangular, having a width in the meter range and an indeterminate length. That is, the membrane may be formed into a roll with the length determined by cutting the membrane at predetermined distances during a continuous formation operation.

In one embodiment, the membrane may have a unit average weight in a range of less than about 0.05 oz/yd². In one embodiment, the membrane may have a unit average weight in a range of from about 0.05 oz/yd² to about 0.1 oz/yd², from about 0.1 oz/yd² to about 0.5 oz/yd², from about 0.5 oz/yd² to about 1 oz/yd², from about 1 oz/yd² to about 2 oz/yd², or from about 2 oz/yd² to about 3 oz/yd².

The desired membrane is supportive of at a first selectively permeable coating. "Selectively permeable" as used herein refers to a coating that possesses significantly differing permeabilities to desired chemical penetrants (for example, water vapor) relative to undesired penetrants (for example, chemical, biological, radiological, or microbial agents). In some embodiments, selectively permeable coatings may provide the underlying membranes with a permeability to water vapor versus the permeability to a chemical, biological, radiological, or microbial agents that is greater by a factor of about 5, or greater by a factor in a range of from about 5 to about 10, from about 10 to about 50, from about 50 to about 100, from about 100 to about 500, or from about 500 to about 1000. Desirably, the permeability to water vapor would be so much greater than the permeability to chemical, biological, radiological, or microbial agents, which itself would desirably be zero, so that this factor would approximate infinity.

The first selectively permeable coating comprises an effective amount of at least one antichemical, antibiological, antiradiological and/or antimicrobial agent. The agent may be any agent, or combination of agents, that reduces or eliminates the activity of a chemical, biological, radiological or microbial agent, or the ability of a chemical, biological, radiological or microbial agent to migrate through an article comprising the agent. In some embodiments, the agent(s) may be capable of reacting or interacting with a chemical, biological, radiological or microbial agent to inactivate the agent. As used herein, the term "inactivating" an agent may include one or both of reducing the activity of the chemical, biological, radiological or microbial agent or increasing an amount of time for a significant amount of unreacted biologically active chemical, biological, radiological or microbial agent to pass through the article. "Inactivating" an agent may also include reacting with the chemical, biological, radiological or microbial agent to form a modified agent that may have an activity that is less than that of the activity of the unreacted microbial agent. In one embodiment, the modified agent may have activity that is at least 80 percent less than that of the activity of the unreacted chemical, biological, radiological or microbial agent.

Examples of suitable antimicrobial agents include, but are not limited to halamines; quaternary ammonia compounds such as alkylbenzyldimethyl benzalkonium chloride; silver ion containing compounds; sulfonamides such as benzenesulfonamide; N-chloro-4-methyl-sodium salt; zinc ion containing compounds such as zinc pyrithiones, 2-mercaptobenzothiazole, zinc salt and zinc sulfate; copper ion containing compounds such as copper oxide, copper thiocyanate, and copper sulfate; chlorine releasing compounds such as hypochlorite, sodium dichloro-s-triazinetrione, trichloro-s-triazinetrione, or combinations of these.

Other particular antimicrobial agents that may also exhibit activity against chemical and or biological agents, as well as microbial agents, include, but are not limited to, (1,1'-biphenyl)-2-ol; carbamic acid, 1H-benzimidazol-2-yl, methyl ester; 2(1H)-pyriddinethione, zinc salt; ethyl ziram; thiocyanic acid, (2-benzothiazoylthio)methyl ester; tetrahydro-3,5-dimethyl-2H-1,3,5-thiadiazine-2-thione; thiocyanic acid (2-benzothiazolythio)methyl ester; carbamodithio acid, potassium salt; carbamodithio acid, , sodium salt; thiocyanic acid, methylene ester; thiocyanic acid, (2-benzothiazolythio)methyl ester; N-hydroxymethyl-N-methyldithiocarbonate; 2(3H)-benzothiazolethione, sodium salt; carbamic acid, [1-((butylamino)carbonyl)-1H-benzimidiazol-2-yl]-, methyl ester; benzene, 1-[(diiodomethyl)sulfonyl]-4-methyl-3(2H)-isothiazolone; formaldehyde, thioperoxydicarbonic diamide; carbamodithioic acid, sodium salt; tetramethyl thiuramidisulfide; thioperoxydicarbonic diamide([(H₂N)C(S)]₂S₂); zinc, bis(dimethylcarbamodithioato-S,S'; 2-mercaptobenzothiazole, 2(3H)-benzothiazolethione; zinc oxide; 2(3H)-benzothiazolethione, formaldehyde; thioperoxydiocarbonic diamide; 3(2H)-isothiazolone, 2-methyl-; 2(1H)-pyridinethione, 1-hydroxy- zinc salt; 3(2H)-isothiazolone; borax decahydrate; sulfuric acid diammonium salt; boric acid; boron acid; ammonium phosphate; ammonium sulphate or combinations of these.

In one embodiment wherein an antimicrobial agent is desirably utilized, the antimicrobial agent may comprise a halamine having any of the following structures (1)-(10):

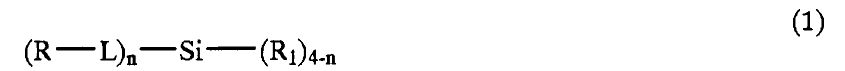

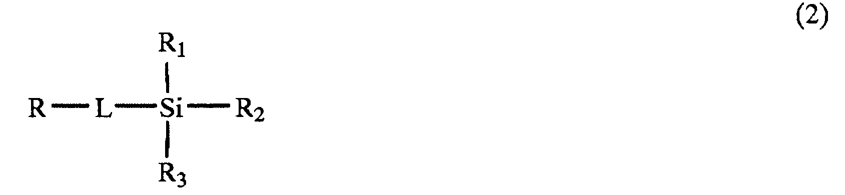

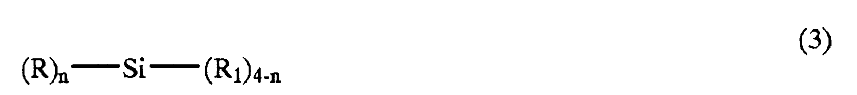

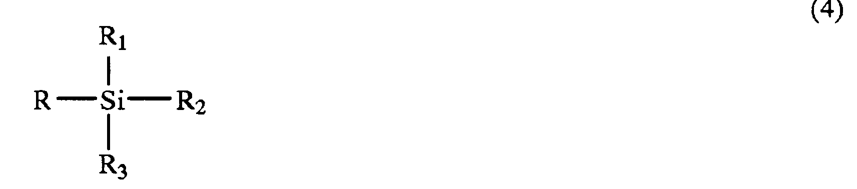

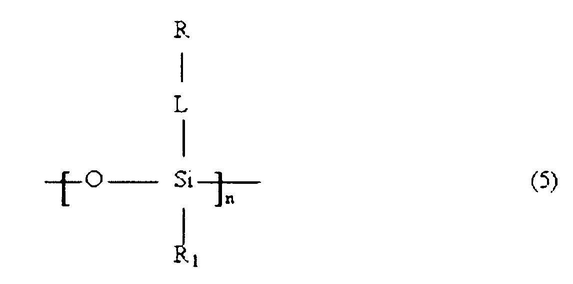

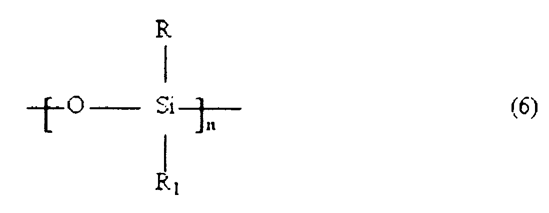

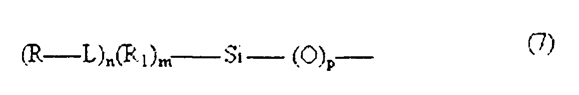

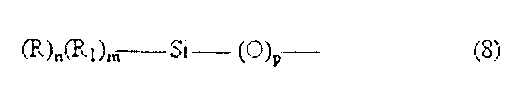

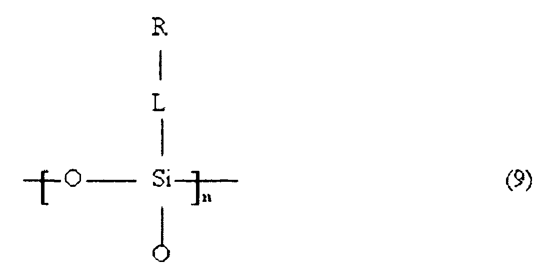

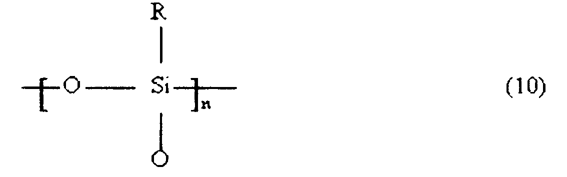

For structures (1)-(8) above, R₁, R₂, and R₃ are independently selected from a C₁-C₄ alkyl, aryl, C₁-C₄ alkoxy, hydroxyl, chloro, or C₁-C₄ ester group, wherein at least one of R₁, R₂, or R₃ is a C₁-C₄ alkoxy, hydroxyl, chloro, or C₁-C₄ ester group; m=0, 1 or 2; n=1, 2, or 3 for structures (1), (3), (7), and (8); p=1, 2, or 3; m+n+p = 4; and R is defined below.

L is a linker group that may be utilized to attach R to the Si moiety. In certain embodiments, L is a alkylene, amine or ether group, comprised of 1-13 carbons, 0-3 nitrogen or oxygen atoms, and in others, L is a alkylene group of 1-13 carbons and a carbamate, thiocarbamate, or urea functional group.

R groups suitable for structures (1), (2), (5), (7), and (9) above have the following structures (11)-(21):

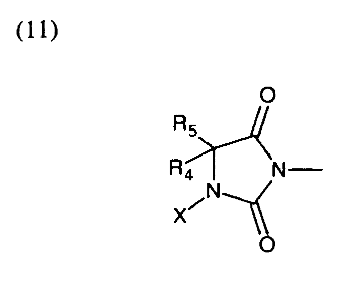

Wherein R₄ and R₅ are independently selected from a C₁-C₄ alkyl, aryl, or hydroxymethyl group; and wherein X is chlorine or bromine. X can also be hydrogen if the compound is represented by structures (5), a siloxane, or (9), a modified substrate.

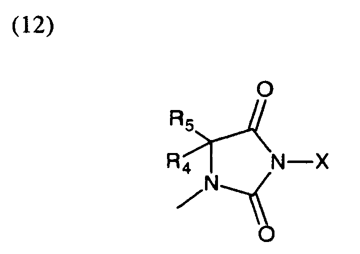

Wherein R₄ and R₅ are independently selected from a C₁-C₄ alkyl, aryl, or hydroxymethyl group; and wherein X is hydrogen, chlorine or bromine.

Representative compounds according to structures (1), (2), (5), (7), and (9) wherein R comprises groups (11) or (12) are those wherein R₁, R₂, and R₃ are independently selected from a methyl, ethyl, phenyl, methoxy, ethoxy, or hydroxy group, and wherein R₄ and R₅ are independently selected from a methyl, ethyl, hydroxymethyl or phenyl group.

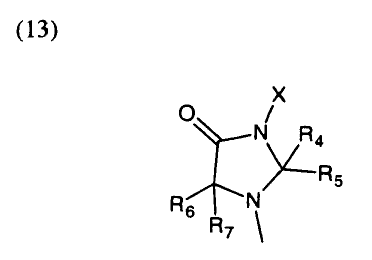

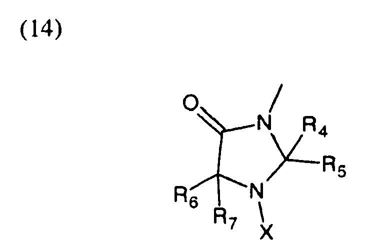

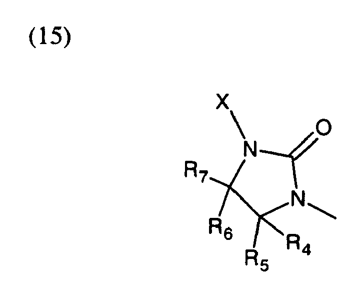

Wherein R₄, R₅, R₆, and R₇ are independently selected from a C₁-C₄ alkyl, aryl, or hydroxymethyl group; and wherein X is hydrogen, chlorine, or bromine.

Representative compounds according to structures (1), (2), (5), (7), and (9) wherein R comprises groups (13), (14) or (15) are those wherein R₁, R₂, and R₃ are independently selected from a methoxy, ethoxy, or hydroxy group, and wherein R₄, R₅, R₆ and R₇ are a methyl group; and L is an alkylene, amine, or ether group, comprised of 1-4 carbons, and 0-1 nitrogen or oxygen atoms, in other embodiments, L is an alkylene group, comprised of 1-4 carbons, and a carbamate, thiocarbamate, or urea functional group.

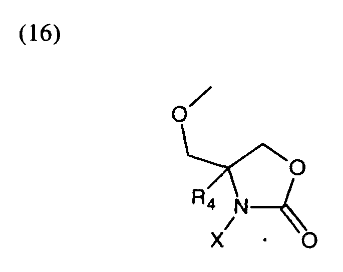

Wherein R₄ is at least one of a C₁-C₄ alkyl, aryl, or hydroxymethyl group; and wherein X is hydrogen, chlorine, or bromine.

Representative compounds according to structures (1), (2), (5), (7), and (9) wherein R comprises group (16) are those wherein R₁, R₂, and R₃ are independently selected from a methoxy, ethoxy, or hydroxy group, and wherein R₄ is a methyl ethyl, or hydroxymethyl group; and L is an alkylene group, comprised of 1-3 carbons, or L is an alkylene group, comprised of 1-3 carbons, and a carbamate, thiocarbamate, or urea functional group.

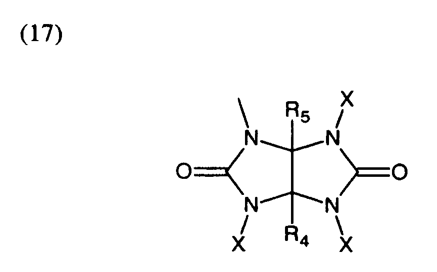

Wherein R₄ and R₅ are independently selected from a C₁-C₄ alkyl, aryl, or hydroxymethyl group; and wherein X is independently selected from hydrogen, chlorine, bromine, or hydroxymethyl; and wherein at least one X is hydrogen, chlorine, or bromine.

Representative compounds according to structures (1), (2), (5), (7), and (9) wherein R comprises group (17) are those wherein R₁, R₂, and R₃ are a methoxy, ethoxy, or hydroxy group, and wherein R₄ is a methyl, ethyl, or hydroxymethyl group; and L is an alkylene group, comprised of 1-3 carbons, or L is an alkylene group, comprised of 1-3 carbons, and a carbamate, thiocarbamate, or urea functional group.

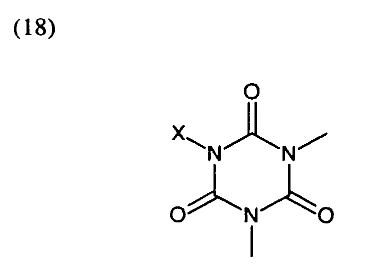

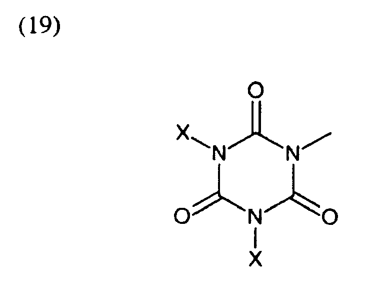

Wherein X is independently selected from hydrogen, chlorine, bromine, or hydroxymethyl; and wherein at least one X is hydrogen, chlorine, or bromine. Representative compounds according to structures (1), (2), (5), (7), and (9) wherein R comprises group (18) or (19) are those wherein R₁, R₂, and R₃ are a methoxy, ethoxy, or hydroxy group, and L is an alkylene, amine, or ether group, comprised of 1-4 carbons and 0-1 nitrogen or oxygen atoms, or L is an alkylene group, comprised of 1-4 carbons, and a carbamate, thiocarbamate, or urea functional group.

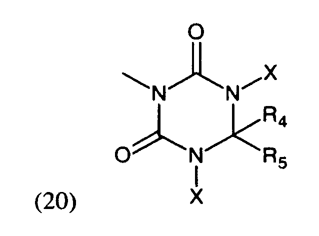

Wherein R₄ and R₅ are independently selected from a C₁-C₄ alkyl, aryl, or hydroxymethyl group; and wherein X is independently selected from hydrogen, chlorine, bromine, or hydroxymethyl; and wherein at least one X is hydrogen, chlorine, or bromine.

Representative compounds according to structures (1), (2), (5), (7), and (9) wherein R comprises group (20) are those wherein R₁, R₂, and R₃ are independently selected from a methoxy, ethoxy, or hydroxy group; R₄ and R₅ are a methyl group; and L is an alkylene, amine or ether group, comprised of 1-4 carbons and 0-1 nitrogen or oxygen atoms, or L is an alkylene group, comprised of 1-4 carbons, and a carbamate, thiocarbamate, or urea functional group.

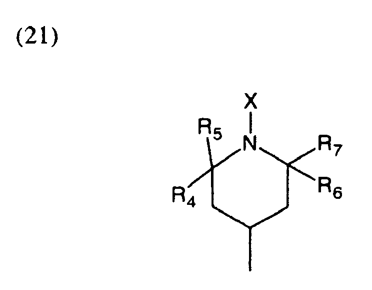

Wherein R₄, R₅, R₆ and R₇ are independently selected from a C₁-C₄ alkyl, aryl, or hydroxymethyl group; and wherein X is chlorine or bromine when on structure (1) or (2), but X is hydrogen, chlorine, or bromine wherein on structures (5), (7), or (9).

Representative compounds according to structures (1), (2), (5), (7), and (9) wherein R comprises group (21) are those wherein R₁, R₂, and R₃ are independently selected from a methoxy, ethoxy, or hydroxy group; R₄, R₅, R₆ and R₇ are a methyl group; and L is an alkylene, amine or ether group, comprised of 1-4 carbons and 0-1 nitrogen or oxygen atoms, or L is an alkylene group, comprised of 1-4 carbons, and a carbamate, thiocarbamate, or urea functional group.

R groups suitable for structures (3), (4), (6), (8), and (10) are an amino alkylene or a polyamino alkylene group comprising at least one N-chloro or N-bromo group. One representative R group for structures (3), (4), (6), (8), and (10) is an amino propyl group.

For groups (5), (6), (9) and (10), n is the number of repeating units, not to be confused with n of structures of (1), (3), (6) and (7) where n is the number of R moieties on Si. The repeating number of units n is greater than or equal to 2, however, n can be as much as 500 or greater. Suitable halamines and derivatives thereof may be obtained commercially from Vanson Halosource, Incorporated (Redmond, Washington).

In other embodiments of the invention where an antimicrobial agent is desirably utilized in the first selectively permeable coating, the antimicrobial agent may comprise one or more quaternary ammonium salts. Many of these are known and/or commercially available, and any capable of acting as an antimicrobial agent are suitable for use in the present selectively permeable coatings. Of these, silicon-containing quaternary ammonium salts, such as those having the following formula (22) may desirably be used as the antimicrobial agent in certain embodiments of the invention:

R₃N⁺R⁰ₙSiX₄₋ₙY⁻ (22)

Wherein each R and each R⁰ is independently a non-hydrolysable organic group; each X is, independently, a hydrolysable group; n is an integer of 0 to 3; and Y is a suitable anionic moiety to form the salt of the compound of Formula I. Y⁻ may be a halide in some embodiments. In some embodiments, two of the Rs may be methyl and one R may be octadecyl. In one embodiment, R⁰ is propenyl, each X may be a methoxy, n may be 1 and Y may be chloride. One exemplary silicon-containing quaternary ammonium monomer according to Formula 22 is 3-(trimethoxysilyl) propyldimethyloctadecyl ammonium chloride.

Such silicon-containing quaternary ammonium antimicrobial agents may typically be manufactured and supplied in solvents, such as, e.g., methanol. The use of such solvents may allow the silicon-containing quaternary ammonium salts to be adsorbed by the membrane so that an interpenetrating network may be formed within the pores thereof.

In additional embodiments of the invention, the silicon-containing quaternary ammonium salt monomer of Formula (22) may be used to make an antimicrobial polymer comprising repeating units of Formula (23):

R₃N⁺R⁰ₙSiX¹₄₋ₙY⁻ (23)

Wherein each R and each R⁰ is independently a non-hydrolysable organic group, such as, without limitation, an alkyl group of 1 to about 22 carbon atoms or an aryl group, for example, phenyl; each X¹ is -OR¹, -OH or -O-Si, wherein R¹ is an alkyl group of 1 to about 22 carbon atoms, or an aryl group of 6 carbon atoms; n is an integer of 0 to 3; and Y is an anionic moiety suitable to form the salt of the repeating units of Formula (23), such as halide, hydroxyl, acetate, SO₄⁻², CO₃⁻² and a PO₄⁻² counter ion. In some embodiments, Y is a halide. In some embodiments, each of the R groups is independently methyl, ethyl, propyl, butyl, octyl, dodecyl, tetradecyl or octadecyl; each of the R⁰ groups is independently methylenyl, ethylenyl, propylenyl, butylenyl, octylenyl, dodecylenyl, tetradecylenyl or octadecylenyl; and each X¹ is -OR¹, wherein R¹ is methyl, ethyl, propyl or butyl.

The quaternary ammonium salt monomer may also be according to formulas (24) and (25) in some embodiments:

(R¹)₃SiR²N⁺(R³)(R⁴)(R⁵)Y⁻ (24)

(R¹)₃SiR²N(R³)(R⁴) (25)

Wherein each R¹ is independently halogen or R⁶O, wherein R⁶ is H, alkyl of 1 to about 22 carbon atoms, acetyl, acetoxy, acyl, propylene glycol, ethylene glycol, polyethylene glycol, polypropylene glycol; a block polymer or copolymer of ethylene and propylene glycol, an alkyl monoether of 1 to about 22 carbon atoms of propylene glycol, ethylene glycol, polyethylene glycol, polypropylene glycol; a block polymer or copolymer of ethylene and propylene glycol or the monoester of a carbonic acid of 1 to about 22 carbon atoms and propylene glycol, ethylene glycol, polyethylene glycol, polypropylene glycol; a block polymer or copolymer of ethylene and propylene glycol; octylphenol; nonylphenol; or sorbitan ether;
R² is benzyl, vinyl, or alkyl of 1 to about 22 carbon atoms;
R³ and R⁴ are, independently, lower alkyl alcohol of 1 to about 6 carbon atoms, lower alkoxy of 1 to about 6 carbon atoms, alkyl of 1 to about 22 carbon atoms, or R³ and R⁴ can, together form a morpholine or cyclic or heterocyclic, unsaturated or saturated, five to seven-member ring of Formula (26):

-R³-(R⁷)ₖ-R⁴- (26)

wherein k is an integer from 0 to 2;
Wherein R⁷, where the ring is saturated, is CH₂, O, S, NH, NH₂⁺, NCH₂CH₂NH₂. NCH₂CH₂NH₃⁺, NCH₂CH₂N(R⁸)(R⁹), NCH₂CH₂N⁺(R⁸)(R⁹)(R¹⁰), N(alkyl), N(aryl), N(Benzyl), wherein each R⁸, R⁹, and R¹⁰ is, independently, benzyl, polyether, lower alkyl alcohol of 1 to 4 carbon atoms, lower alkoxy of 1 to 4 carbon atoms, or alkyl of 1 to about 22 carbon atoms, and wherein R⁷, where the ring is unsaturated, is CH, N, N⁺H, N⁺(alkyl), N⁺(aryl), N⁺(benzyl), NCH₂N, N⁺HCH₂N, N⁺(alkyl)CH₂N, N⁺(aryl)CH₂N, or N⁺(Benzyl)CH₂N;
Wherein the ring is unsubstituted or substituted with alkyl of 1 to 22 carbon atoms, ester, aldehyde, carboxylate, amide, thio-amide, nitro, amine, or halide;
R⁵ is lower alkyl alcohol of 1 to 6 carbon atoms, CH₂C₆H₅, polyether, alkyl, alkoxy, perfluoroalkyl, perfluoroalkylsulfonate or perfluoroalkylcarboxylate, wherein the alkyl alkoxy, perfluoroalkyl, perfluoroalkylsulfonate or perfluoroalkylcarboxylate is of 1 to about 22 carbon atoms, or is a five to seven-member ring of Formula V as described above; and

Y⁻ is a suitable anionic moiety to form the salt of the compound of Formula (24) or (25), and preferably, chloride, bromide or iodide.

Particular examples of silicon-containing quaternary ammonium salt repeating units include those where two of the Rs are methyl and one R is octadecyl, R⁰ is propenyl, n is 1 and Y is chloride, such that the polymer is polymeric 3-(trimethoxysilyl) propyldimethyloctadecyl ammonium chloride. Another example of a useful polymeric silicon-containing quaternary ammonium salt is octadecylaminodimethyltrimeth-oxysilylpropyl ammonium chloride. These and other quaternary ammonium salts useful as the antimicrobial agent in certain embodiments of the invention are commercially available from BIOSAFE, Inc., Pittsburgh, PA.

One method of making the silicon-containing quaternary ammonium polymer includes adding with agitation the silicon-containing monomer to an excess of solvent, such as water, along with heat and/or a catalyst such as a mineral or organic acid or base, which initiates the polymerization process. The polymer is recovered from resulting precipitation or solvent removal.

A chemical agent may be a non-living chemical substance having toxic properties. A chemical agent may also include nonliving toxic products produced by living organisms e.g., toxins. A biological agent may be a living or a quasi-living material (e.g., prions) having toxic properties. A radiological agent may include alpha beta and/or gamma radiation, e.g., alpha, beta and/or gamma dust particles. A microbial agent includes microorganisms, and in particular, pathogenic microorganisms. The major classes of microorganisms include bacteria, fungi such as mold mildew, yeasts and algae.

The agent to be used in the first selectively permeable coating may also be defined by the chemical, biological, radiological or microbial agent against which it exhibits activity. In one embodiment, the antichemical, antibiological, antiradiological and/or antimicrobial agent may exhibit activity against one or more chemical warfare agents. Examples of chemical warfare agents include, but are not limited to, one or more of incapacitating agents, lachrymators, vesicants or blister agents, nerve agents, pulmonary agents, blood agents, or malodorants.

Examples of incapacitating agents may include nervous system affecters, vomiting agents, choking agents, hallucinogens, sedatives, narcotics, depressants, and the like, and combinations of two or more thereof. In one embodiment, an incapacitating agent may include 3-quinuclidinyl benzilate (QNB, BZ), which may be an anticholinergic agent that may react with a probe comprising, for example, choline. Alternative nervous system affecters may include commercially available, over-the-counter (OTC) or prescription pharmaceutical compositions. In one embodiment, an incapacitating agent may include curare, or a curare analog or derivative.

Examples of lachrymators may include one or more of o-chlorobenzylmalonitrile, chloromethyl chloroformate, stannic chloride, sym-dichloromethyl ether, benzyl bromide, xylyl bromide, methyl chlorosulphonate, ethyl iodoacetate, bromacetone, bromomethyl-ethyl ketone, acrolein (2-propenal), capsaicin, analogs and/or derivatives of these, or the like.

Examples of vesicants may include one or more of sulfur mustard, nitrogen mustard, or an arsenical such as Lewisite. Sulfur mustards may include one or more of 2-chloroethyl chloromethyl sulfide, bis(2-chloroethyl) sulfide or dichloroethyl disulfide, bis (2-chloroethylthio) methane, 1,2-bis (2-chloroethylthio) ethane, 1,3-bis (2-chloroethylthio)-n-propane, 1,4-bis (2-chloroethylthio)-n-butane, 1,5-bis (2-chloroethylthio)-n-pentane, bis (2-chloroethylthiomethyl) ether, or bis (2-chloroethyl thioethyl) ether. Nitrogen mustards may include one or more of bis (2-chloroethyl) ethylamine, bis (2-chloroethyl) methylamine, or tris (2-chloroethyl) amine. Lewisites may include one or more of 2-chlorovinyl dichloroarsine, or bis (2-chlorovinyl) chloroarsine, tris (2-chlorovinyl) arsine.

Examples of nerve agents may include cholinesterase inhibitors. In one embodiment, a cholinesterase inhibitor may include one or more of o-alkyl (Me, Et, n-Pr or i-Pr) - phosphonofluoridates, such as o-isopropyl methylphosphonofluoridate (sarin) or o-pinacolyl methylphosphonofluoridate (soman); o-alkyl N,N-dialkyl (Me, Et, n-Pr or i-Pr) phosphoramidocyanidates, such as o-ethyl N,N-dimethyl phosphoramidocyanidate (tabun); or o-alkyl S-2-dialkyl (Me, Et, n-Pr or i-Pr)-aminoethyl alkyl (Me, Et, n-Pr or i-Pr) phosphonothiolates and corresponding alkylated or protonated salts, such as o-ethyl S-2-diisopropylaminoethyl methyl phosphonothiolate.

Examples of pulmonary agents may include one or both of phosgene (carbonyl chloride) and perfluroroisobutylene. Exemplary chemical toxins may include one or more of palytoxin, ricin, saxitoxin, or botulinum toxin.

Examples of blood agents may include forms of cyanide such as salts, and analogs and derivatives of cyanide salts. A solid salt of cyanide may include sodium, potassium, and/or calcium. A volatile liquid form of cyanide may include hydrogen cyanide and/or cyanogen chloride.

In other embodiments, the antichemical, antibiological, antiradiological and/or antimicrobial agent may exhibit activity against one or more toxic industrial materials (TIM). Toxic industrial materials may include one or more of ammonia, arsine, boron trichloride, boron trifluoride, carbon disulfide, chlorine, diborane, ethylene oxide, formaldehyde, phosgene, phosphorus trichloride, sulfur dioxide, sulfuric acid, cyanogen chloride, hydrogen bromide, hydrogen chloride, hydrogen fluoride, hydrogen sulfide, or hydrogen cyanide.

Antibiological agents may also be used in the first selectively permeably coating and may exhibit activity against biological agents such as pathogens. Pathogens are infectious agents that may cause disease or illness to their host (animal or plant). In some embodiments, antibiological agents may be utilized in the first selectively permeable coating that exhibit activity against pathogens, e.g., including one or more of bacteria, protozoa, fungus, parasites, spores, viruses or prions.

Some examples of bacterial biological agents (and the diseases or effect caused by them) may include one or more of: escherichia coli (peritonitis, food poisoning); mycobacterium tuberculosis (tuberculosis); bacillus anthracis (anthrax); salmonella (food poisoning); staphylococcus aureus (toxic shock syndrome); streptococcus pneumoniae (pneumonia); streptococcus pyogenes (strep throat); helicobacter pylori (stomach ulcers); or francisella tularensis (tularemia).

Some examples of viruses (and the diseases or effect caused by them) may include one or more of hepatitis A, B, C, D and E (liver disease); influenza virus (flu, Avian flu); SARS coronavirus (severe acute respiratory syndrome); herpes simplex virus (herpes); molluscum contagiosum (rash); or human immunodeficiency virus (AIDS).

Some examples of protozoa (and the diseases or effect caused by them) may include one or more of cryptosporidium (cryptosporidiosis); giardia lamblia (giardiasis); plasmodium (malaria); or trypanosoma cruzi (chagas disease). Some examples of fungi (and the diseases or effect caused by them) may include one or more of pneumocystis jiroveci (opportunistic pneumonia); tinea (ringworm); or candida (candidiasis).

Some examples of parasites may include one or more of roundworm, scabies, tapeworm, or flatworm. Some examples of protein-based pathogens may include prions (Bovine spongiform encephalopathy (BSE) commonly known as mad cow disease or variant Creutzfeldt-Jakob disease (vCJD)).

Toxins include proteins capable of causing disease on contact or absorption with body tissues by interacting with biological macromolecules and may be used as bioweapons. Examples of toxins may include Ricin, SEB, Botulism toxin, Saxitoxin, and many Mycotoxins.

Some other examples of diseases caused by biological agents may include anthrax, Ebola, Bubonic Plague, Cholera, Tularemia, Brucellosis, Q fever, Machupo, Coccidioides mycosis, Glanders, Melioidosis, Shigella, Rocky Mountain Spotted Fever, Typhus, Psittacosis, Yellow Fever, Japanese B Encephalitis, Rift Valley Fever, or Smallpox.

Whatever the antichemical, antibiological, antiradiological or antimicrobial agent utilized in the first selectively permeable coating, it/they will desirably be present in an effective amount(s). An effective amount of the antichemical, antibiological, antiradiological or antimicrobial agent refers to an amount of the agent(s) that is/are sufficient to inactivate, or reduce the activity of, one or more chemical, biological, radiological and/or microbial agent(s), or to slow the migration of one or more chemical, biological, radiological or microbial agent(s) through the article. Desirably, the amount of the antichemical, antibiological, antiradiological and/or antimicrobial agent utilized will also allow the underlying membrane and/or article to meet the performance requirements of the end-use application. In one embodiment, the antichemical, antibiological, antiradiological and/or antimicrobial agent may be present in an amount that is less than about 0.1 weight percent of the combined weight of the membrane and the selectively permeable coating.

In one embodiment, the antichemical, antibiological, antiradiological and/or antimicrobial agent may be present in a range of from about 0.1 weight percent to about 1 weight percent, from about 1 weight percent to about 2 weight percent, from about 2 weight percent to about 5 weight percent, from about 5 weight percent to about 10 weight percent of the combined weight of the membrane and the selectively permeable coating. In one embodiment, the antichemical, antibiological, antiradiological and/or antimicrobial agent may be present in an amount in a range of from about 10 weight percent to about 20 weight percent, from about 20 weight percent to about 30 weight percent, from about 30 weight percent to about 40 weight percent, or from about 40 weight percent to about 50 weight percent of the combined weight of the membrane and the selectively permeable coating. In one embodiment, the antichemical, antibiological, antiradiological and/or antimicrobial agent may be present in an amount that is greater than about 50 weight percent of the combined weight of the membrane and the selectively permeable coating. In one embodiment, the antichemical, antibiological, antiradiological and/or antimicrobial agent may be present is present in an amount in a range of from about 0.1 weight percent to about 20 weight percent of the combined weight of the membrane and the selectively permeable coating.

In one embodiment, the antichemical, antibiological, antiradiological and/or antimicrobial agent may be present in the article in an amount in a range of from about 0.1 mg/cm² to about 0.5 mg/cm², from about 0.5 mg/cm² to about 1 mg/cm², from about 1 mg/cm² to about 2 mg/cm², from about 2 mg/cm² to about 5 mg/cm², from about 5 mg/cm² to about 10 mg/cm², from about 10 mg/cm² to about 25 mg/cm², or from about 25 mg/cm² to about 50 mg/cm² 50 mg/cm² to about 100 mg/cm².

In some embodiments, the first and/or second selectively permeable coating(s) may include one or more of the enzymatically-active material, the catalytically active material, or a chemical-sorbing material. In some embodiments, a laminate including the article and, e.g., an inner and/or outer fabric layer or other additional layers that may include one or more of the enzymatically-active material, the catalytically active material, or a chemical-sorbing material.

An enzymatically-active material may include enzymes capable of catalyzing a chemical reaction of a chemical or microbial agent. An enzymatically active material may include one or more of organophosphorous hydrolase, diisopropylfluorophosphatase, organophosphorous acid anhydrolase, phosphotriesterase, haloamine, or quaternary ammonium salt. In one embodiment, an enzymatically active material may include Lybradyn-OPH, BioCatalytics DFPase, or Genencor Defenz.

Catalytically active nanoparticles, as used herein, include particles with active species or particles capable of generating active species in response to a stimulus (for example, UV radiation). The active species may be capable of reacting or interacting with chemical or microbial agents to reduce their activity, to increase their infiltration time through the membrane, or convert them to a harmless by-product or end product. Nanoparticles as used herein refers to particles having an average particle size on the nano scale.

A nanoparticle may have a largest dimension (for example, a diameter or length) in the range of from about 1 nanometer to 1000 nanometers. Nanoparticle as used herein, may refer to a single nanoparticle, a plurality of nanoparticles, or a plurality of nanoparticles associated with each other. Associated refers to a metal nanoparticle in contact with at least one other metal nanoparticle. In one embodiment, associated refers to a metal nanoparticle in contact with more than one other particle.

A catalytically active material may include a plurality of nanoparticles selected from the group consisting of silver, copper, magnesium oxide, titanium oxide, and aluminum oxide. A chemical-sorbing material may include active carbon.

The first and/or second selectively permeable coating(s), or the protective component, may further include a polymer component, so that when applied and cured, if necessary, to the membrane or other layer of the article, it forms an interpenetrating network or a cross-linked polymeric structure that may mechanically bind the coating to the membrane or other layer by interlinking with the pores of the membrane or other layer. In such embodiments, the selectively permeable coating(s) may be mechanically secured to the membrane by an irreversible cross-linking or polymerization process. In other embodiments, the antichemical, antibiological, antiradiological, and/or antimicrobial agent, or other component of the first selectively permeable coating, may have a chemical affinity for the membrane, or a functional group capable of interacting with the membrane to enable the first selectively permeable coating to be adhered to the membrane thereby.

In one embodiment, the first and/or second selectively permeable coating(s), or protective component, may include an amine or imine containing polymer, such as, e.g., a hydroxyalkyl-substituted polyalkyleneimine or a polyvinyl alcohol-coamine. Advantageously, the hydroxyalkyl-substituted polyalkyleneimine may act as a polymeric component, as well as an antichemical, antibiological, antiradiological, and/or antimicrobial agent. In such embodiments, the hydroxyalkyl-substituted polyalkyleneneimine may include a structural unit having a formula (I): 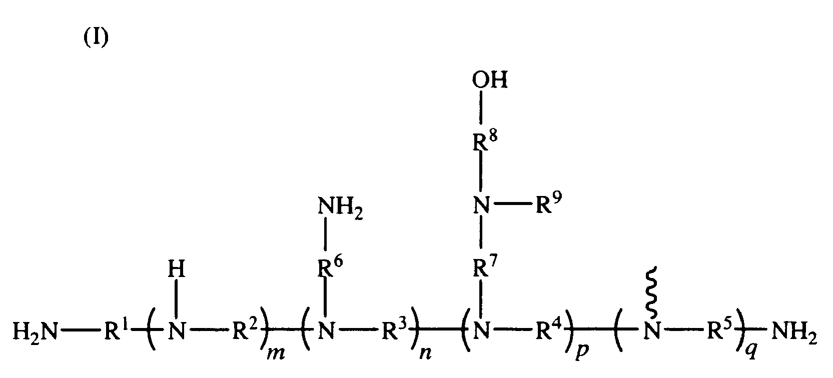 wherein "m" is an integer from 1 to 100, "n" is an integer from 0 to 100, "p" is an integer from 1 to 100, "q" is an integer from 0 to 100; R¹, R², R³, R⁴, R⁵, R⁶, R⁷, and R⁸ are independently at each occurrence an aliphatic radical; and R⁹ is hydrogen, an aliphatic radical, or a group having a formula (II) 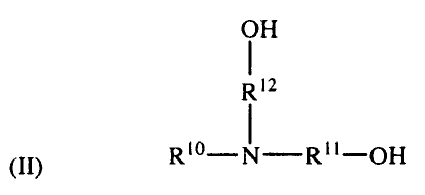 wherein R¹⁰, R¹¹, and R¹² are independently at each occurrence an aliphatic radical. Aliphatic radical is as defined hereinbelow:

An aliphatic radical is an organic radical having at least one carbon atom, a valence of at least one and may be a linear or branched array of atoms. Aliphatic radicals may include heteroatoms such as nitrogen, sulfur, silicon, selenium and oxygen or may be composed exclusively of carbon and hydrogen. Aliphatic radical may include a wide range of functional groups such as alkyl groups, alkenyl groups, alkynyl groups, halo alkyl groups, conjugated dienyl groups, alcohol groups, ether groups, aldehyde groups, ketone groups, carboxylic acid groups, acyl groups (for example, carboxylic acid derivatives such as esters and amides), amine groups, nitro groups and the like.
For example, the 4-methylpent-1-yl radical is a C₆ aliphatic radical comprising a methyl group, the methyl group being a functional group, which is an alkyl group. Similarly, the 4-nitrobut-1-yl group is a C₄ aliphatic radical comprising a nitro group, the nitro group being a functional group. An aliphatic radical may be a haloalkyl group that includes one or more halogen atoms, which may be the same or different. Halogen atoms include, for example; fluorine, chlorine, bromine, and iodine. Aliphatic radicals having one or more halogen atoms include the alkyl halides: trifluoromethyl, bromodifluoromethyl, chlorodifluoromethyl, hexafluoroisopropylidene, chloromethyl, difluorovinylidene, trichloromethyl, bromodichloromethyl, bromoethyl, 2-bromotrimethylene (e.g., -CH₂CHBrCH₂-), and the like. Further examples of aliphatic radicals include allyl, aminocarbonyl (-CONH₂), carbonyl, dicyanoisopropylidene -CH₂C(CN)₂CH₂-), methyl (-CH₃), methylene (-CH₂-), ethyl, ethylene, formyl (-CHO), hexyl, hexamethylene, hydroxymethyl (-CH₂OH), mercaptomethyl (-CH₂SH), methylthio (-SCH₃), methylthiomethyl (-CH₂SCH₃), methoxy, methoxycarbonyl (CH₃OCO-), nitromethyl (-CH₂NO₂), thiocarbonyl, trimethylsilyl ((CH₃)₃Si-), *t*-butyldimethylsilyl, trimethoxysilylpropyl ((CH₃O)₃SiCH₂CH₂CH₂-), vinyl, vinylidene, and the like. By way of further example, a "C₁ - C₃₀ aliphatic radical" contains at least one but no more than 30 carbon atoms. A methyl group (CH₃-) is an example of a C₁ aliphatic radical. A decyl group (CH₃(CH₂)₉-) is an example of a C₁₀ aliphatic radical.

In one embodiment, at least one of R¹, R², R³, R⁴, R⁵, R⁶, R⁷, and R⁸ may include an ethyl radical. In one embodiment, R¹, R², R³, R⁴, R⁵, R⁶, R⁷, and R⁸ may include an ethyl radical. In one embodiment, the hydroxyalkyl-substituted polyalkyleneneimine may include hydroxyethyl-substituted polyethyleneneimine.

A polyalkyleneimine may be characterized by the hydroxyl count. In one embodiment, the average hydroxyl count per repeat unit of the hydroxyalkyl-substituted polyalkyleneneimine may be in a range of from about 0.5 to about 3. In one embodiment, the average hydroxyl count per repeat unit of the hydroxyalkyl-substituted polyalkyleneneimine may be in a range of from about 1 to about 3. In one embodiment, the average hydroxyl count per repeat unit of the hydroxyalkyl-substituted polyalkyleneneimine may be in a range that is greater than 3

A polyalkyleneimine may be characterized by a weight-average molecular weight. In one embodiment, the hydroxyalkyl-substituted polyalkyleneneimine may have a weight-average molecular weight in a range that is greater than about 1000 grams per mole. In one embodiment, the hydroxyalkyl-substituted polyalkyleneneimine may have a weight-average molecular weight in a range of from about 1000 grams per mole to about 2000 grams per mole, from about 2000 grams per mole to about 4000 grams per mole, from about 4000 grams per mole to about 8000 grams per mole, from about 8000 grams per mole to about 10000 grams per mole, or from about 10000 grams per mole to about 25000 grams per mole. In one embodiment, the hydroxyalkyl-substituted polyalkyleneneimine may have a weight-average molecular weight in a range of from about 25000 grams per mole to about 50000 grams per mole, from about 50000 grams per mole to about 75000 grams per mole, from about 75000 grams per mole to about 100000 grams per mole, from about 100000 grams per mole to about 200000 grams per mole, or from about 200000 grams per mole to about 250000 grams per mole.

In embodiments wherein the hydroxyalkyl-substituted polyalkyleneneimine desirably exhibits activity against chemical, biological, radiological and/or microbial agents, it may be present in an effective amount. An effective amount of hydroxyalkyl-substituted polyalkyleneneimine refers to amount of hydroxyalkyl-substituted polyalkyleneneimine required to provide the functional groups sufficient to meet the performance requirements of the end-use application. In one embodiment, hydroxyalkyl-substituted polyalkyleneneimine may be present in an amount that is less than about 0.1 weight percent of the combined weight of the membrane and the selectively permeable coating. In one embodiment, the hydroxyalkyl-substituted polyalkyleneneimine may be present in a range of from about 0.1 weight percent to about 1 weight percent, from about 1 weight percent to about 2 weight percent, from about 2 weight percent to about 5 weight percent, from about 5 weight percent to about 10 weight percent of the combined weight of the membrane and the selectively permeable coating. In one embodiment, the hydroxyalkyl-substituted polyalkyleneneimine may be present in an amount in a range of from about 10 weight percent to about 20 weight percent, from about 20 weight percent to about 30 weight percent, from about 30 weight percent to about 40 weight percent, or from about 40 weight percent to about 50 weight percent of the combined weight of the membrane and the selectively permeable coating. In one embodiment, the hydroxyalkyl-substituted polyalkyleneneimine may be present in an amount that is greater than about 50 weight percent of the combined weight of the membrane and the selectively permeable coating. In one embodiment, the hydroxyalkyl-substituted polyalkyleneimine may be present is present in an amount in a range of from about 0.1 weight percent to about 20 weight percent of the combined weight of the membrane and the first and/or second selectively permeable coating, or protective component.

In one embodiment, the hydroxyalkyl-substituted polyalkyleneimine may be present in the article in an amount in a range of from about 0.5 mg/cm² to about 1 mg/cm², from about 1 mg/cm² to about 2 mg/cm², from about 2 mg/cm² to about 5 mg/cm², from about 5 mg/cm² to about 10 mg/cm², from about 10 mg/cm² to about 25 mg/cm², or from about 25 mg/cm² to about 50 mg/cm².

In other embodiments, any polymeric component may advantageously comprise a polyvinyl alcohol-coamine. Polyvinyl alcohol-coamine polymers are commercially available from, e.g., Celanese under the trade name Erkol®.

Any polymeric component included in the first and/or second selectively permeable coating(s) and/or protective component may include reactive groups capable of curing. A reactive group may participate in a chemical reaction when exposed to one or more of thermal energy, electromagnetic radiation, moisture curing, UV curing, or chemical reagents. Curing may refer to a reaction resulting in polymerization, cross-linking, or both polymerization and cross-linking of the selectively permeable coating(s) or protective component.

In embodiments wherein the first or second selectively permeable coating, or protective component, includes a polymeric component including reactive groups capable of curing, the first selectively permeable coating may include a curing agent. The curing agent may catalyze (accelerate) a curing reaction of the polymeric component. In one embodiment, a curing agent may include one or more epoxide, acid chloride, or chloroformate. In one embodiment, the curing agent may include a reactive triazine. A reactive triazine may include at least one reactive group capable of reacting with at least reactive group in the polymeric component of the selectively permeable coating(s) and/or protective component. In one embodiment, a curing agent may be capable of initiating a chemical reaction between the polymeric component of the selectively permeable coating(s) and the membrane or any other layer of a laminate.

In one embodiment, a reactive triazine may include a structural unit having a formula (III) 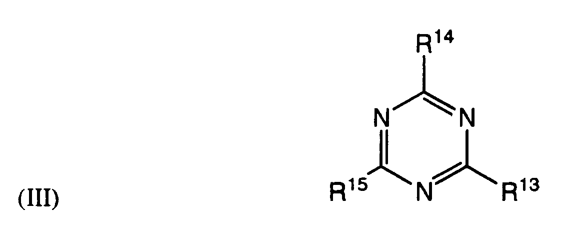 wherein R¹³, R¹⁴, and R¹⁵ includes at least reactive group capable of reacting with the hydroxyalkyl-substituted polyalkyleneimine. In one embodiment, the reactive triazine may include one or more carbamate functional groups. In one embodiment, the reactive triazine may include tris(alkoxycarbonylamino)triazine).

In one embodiment, the curing agent may be present in an amount in a range of from about 0.1 weight percent to about 2 weight percent of the selectively permeable coating, from about 2 weight percent to about 5 weight percent, from about 5 weight percent to about 10 weight percent, from about 10 weight percent to about 15 weight percent, from about 15 weight percent to about 20 weight percent, from about 20 weight percent to about 25 weight percent, or from about 25 weight percent to about 30 weight percent of the selectively permeable coating.

In one embodiment, the first and/or second selectively permeable coating(s) or protective component, may be cured. Cured may refer to a selectively permeable coating or protective component comprising a polymeric component wherein more than about 5 percent of the reactive groups of the polymeric component have reacted, or alternatively a percent conversion that is in a range of greater than about 5 percent. Percent conversation may refer to a percentage of the total number of reacted groups to the total number of reactive groups. In one embodiment, the first and/or second selectively permeable coating(s) and/or protective component may be cured so that the selectively permeable coating(s) and/or protective component may be chemically or mechanically bound to the membrane, or other layers of the article or laminate. The first and/or second selectively permeable coating(s) and/or protective component may be cured such that a substantial fraction hydroxyl groups remain substantially unaffected in the hydroxyalkyl-substituted polyalkyleneimine, in those embodiments of the invention wherein the same is utilized.

In embodiments of the invention comprising the hydroxyalkyl-substituted polyakyleneimine, the first and/or second selectively permeable coating(s) and/or protective component may further include a polyalkylamine. A polyalkylamine refers to a polymer including a plurality of amine groups and an alkyl-based polymer backbone. A suitable polyalkylamine may be a homopolymer, a copolymer, or derivatives thereof. Suitable derivatives may include one or more secondary amine groups, rather than a primary amine. In one embodiment, a polyalkylamine may provide additional functional properties to the selectively permeable coating, for example, MVTR, air permeability, chemical or microbial agent sorption, and the like.

In such embodiments, the polyalkylamine may be present in an amount in a range of from about 0.5 weight percent to about 1 weight percent, from about 1 weight percent to about 2 weight percent, from about 2 weight percent to about 5 weight percent, from about 5 weight percent to about 10 weight percent, from about 10 weight percent to about 20 weight percent, from about 20 weight percent to about 30 weight percent, from about 30 weight percent to about 40 weight percent, or from about 40 weight percent to about 50 weight percent of the selectively permeable coating(s) and/or protective component.

In one embodiment, the selectively permeable coating(s) and/or protective component may include a hydroxyalkyl-substituted polyalkyleneimine and a polyvinylamine. A polyvinyl amine may refer to a polymer derived from a vinyl amine-based polymer precursor. In one embodiment, the selectively permeable coating(s) and/or protective component may include a polyvinyl alcohol-vinyl amine copolymer and a hydroxyalkyl-substituted polyalkyleneimine. Suitable polyvinyl amine and derivatives thereof may be obtained commercially from BASF Corporation (Mount Olive, New Jersey).

In such embodiments, the polyvinylamine may be present in an amount in a range of from about 0.5 weight percent to about 1 weight percent, from about 1 weight percent to about 2 weight percent, from about 2 weight percent to about 5 weight percent, from about 5 weight percent to about 10 weight percent, from about 10 weight percent to about 20 weight percent, from about 20 weight percent to about 30 weight percent, from about 30 weight percent to about 40 weight percent, or from about 40 weight percent to about 50 weight percent of the selectively permeable membrane(s) and/or protective component.

In one embodiment, a curing agent for the polyalkyleneimine may also cure the polyalkylamine and/or polyvinylamine. In an alternate embodiment, the first selectively permeable coating may include a curing agent different from a reactive triazine that is capable of initiating a curing reaction of the polyalkylamine and/or polyvinylamine. In one embodiment, the cured first selectively permeable coating may include a cured reaction product of the polyalkyleneimine and the polyalkylamine and/or polyvinylamine.

The first selectively permeable coating may be present on the surface of the membrane, inside the pores, or both on the surface of the membrane and inside the pores. In one embodiment, the first selectively permeable coating may substantially coat an inner surface of the pores. In one embodiment, the coating may surround and adhere to the nodes and fibrils that defme the pores in the membrane. In one embodiment, the first selectively permeable coating may also conform to the surfaces of the nodes and fibrils that define the pore in the membrane. In such embodiments, the first selectively permeable coating may essentially have a thickness of about zero, i.e., the first selectively permeable coating may coat the inner surfaces of the pores of the membrane only.

In other embodiments, the first selectively permeable coating may be deposited onto the membrane without blocking the pores of the membrane. Or, the first selectively permeable coating may be without voids and/or "pin holes" to form a continuous coating. In yet other embodiments, the coating may have discontinuous portions. The coating layer may be uniform in thickness, or may have a thickness that differs from area to area.

In one embodiment, the first selectively permeable coating may have a thickness in a range of from about 20 micrometers to about 40 micrometers, from about 40 micrometers to about 60 micrometers, from about 60 micrometers to about 120 micrometers, from about 120 micrometers to about 160 micrometers, from about 160 micrometers to about 200 micrometers, from about 200 micrometers to about 240 micrometers, from about 240 micrometers to about 280 micrometers, from about 280 micrometers to about 320 micrometers, from about 320 micrometers to about 360 micrometers, or from about 360 micrometers to about 400 micrometers. In one embodiment, the first selectively permeable coating may have a thickness that is in a range of from about 400 micrometers to about 600 micrometers, from about 600 micrometers to about 800 micrometers, or from about 800 micrometers to about 1000 micrometers.

Similarly, the protective component, whether provided alone or as an element of a second selectively permeable coating, may be operatively disposed relative to the first selectively permeable coating. Desirably, the protective component will be less hydrophilic than the first selectively permeable coating and thus, reduce the amount of moisture that may otherwise reach the first selectively permeable coating, and be provided in connection with the first selectively permeably membrane that facilitates the same. As such, the protective component may be an element of the first selectively permeable coating, be provided separately from the first selectively permeable coating, may be provided as an element of a second selectively permeable coating, or comprise substantially the entirety of a second selectively permeable coating.

The protective component/second selectively permeable coating may overly substantially all, or just a portion, of the first selectively permeable coating. Desirably, the protective component/second selectively permeable coating will overly substantially all of the first selectively permeable coating. To the extent that the first selectively permeable coating is present on the surface of the membrane, the protective component/second selectively permeable coating will be as well. Or, if the first selectively permeable coating coats an inner surface of the pores of the membrane, thus having essentially a thickness of about zero, the protective component/second selectively permeable coating may do so as well. The protective component/second selectively permeable coating may also be without voids and/or "pin holes" to form a continuous coating, as the first selectively permeable coating. In yet other embodiments, the protective component/second selectively permeable coating may have discontinuous portions. The protective component/second selectively permeable coating may be uniform in thickness, or may have a thickness that differs from area to area.

In one embodiment, the protective component/second selectively permeable coating may have a thickness in a range of from about 20 micrometers to about 40 micrometers, from about 40 micrometers to about 60 micrometers, from about 60 micrometers to about 120 micrometers, from about 120 micrometers to about 160 micrometers, from about 160 micrometers to about 200 micrometers, from about 200 micrometers to about 240 micrometers, from about 240 micrometers to about 280 micrometers, from about 280 micrometers to about 320 micrometers, from about 320 micrometers to about 360 micrometers, or from about 360 micrometers to about 400 micrometers. In one embodiment, the protective component/second selectively permeable coating may have a thickness that is in a range of from about 400 micrometers to about 600 micrometers, from about 600 micrometers to about 800 micrometers, or from about 800 micrometers to about 1000 micrometers.

An article as described herein may be characterized by a combination of comfort and protective barrier properties. Comfort and protective barrier properties may be characterized by one or more of thickness, unit average weight, air permeability, moisture vapor transmission rate (MVTR), or chemical or microbial agent permeability of the article. In one embodiment, the article may have a thickness in a range of from about 300 micrometers to about 400 micrometers, from about 400 micrometers to about 500 micrometers, from about 500 micrometers to about 600 micrometers, from about 600 micrometers to about 700 micrometers, from about 700 micrometers to about 800 micrometers, from about 800 micrometers to about 900 micrometers, from about 900 micrometers to about 1000 micrometers, from about 1000 micrometers to about 10000 micrometers.

In one embodiment, the article may have a unit average weight in a range of from about 5 mg/cm² to about 30 mg/cm², from about 30 mg/cm² to about 40 mg/cm², from about 40 mg/cm² to about 50 mg/cm², from about 50 mg/cm² to about 60 mg/cm², from about 60 mg/cm² to about 70 mg/cm², from about 70 mg/cm² to about 80 mg/cm², from about 80 mg/cm² to about 90 mg/cm², from about 90 mg/cm² to about 200 mg/cm².

In one embodiment, the article may have air permeability that is less than about 6 cfm at 0.5 inches H₂O. In one embodiment, the article may have air permeability that is in a range of from about 0.01 cfm to about 0.1 cfm, from about 0.1 cfm to about 0.5 cfm, from about 0.5 cfm to about 1 cfm, from about 1 cfm to about 2 cfm, from about 2 cfm to about 3 cfm, from about 3 cfm to about 4 cfm, from about 4 cfm to about 5 cfm, or from about 5 cfm to about 6 cfm. Air permeability as described herein maybe measured using the test conditions described herein in the specification. As used herein, cfm/ft is cubic feet per minute.

In one embodiment, the article may have a moisture vapor transmission rate (MVTR) that is greater than about 500 g/m²/day. In one embodiment, the article may have a moisture vapor transmission rate in a range of from about 500 g/m²/day to about 600 g/m²/day, from about 600 g/m²/day to about 800 g/m²/day, from about 800 g/m²/day to about 1000 g/m²/day, from about 1000 g/m²/day to about 1500 g/m²/day, or from about 1500 g/m²/day to about 2000 g/m²/day. In one embodiment, the article may have a moisture vapor transmission rate (MVTR) that is greater than about 2000 g/m²/day.

In one embodiment, the article may have a moisture vapor transmission rate (MVTR) that is greater than about 4000 g/m²/day. In one embodiment, the article may have a moisture vapor transmission rate in a range of from about 4000 g/m²/day to about 5000 g/m²/day, from about 5000 g/m²/day to about 6000 g/m²/day, from about 6000 g/m²/day to about 7000 g/m²/day, from about 7000 g/m²/day to about 8000 g/m²/day, or from about 8000 g/m²/day to about 10000 g/m²/day. In one embodiment, the article may have a moisture vapor transmission rate in a range of from about10000 g/m²/day to about 15000 g/m²/day, from about 15000 g/m²/day to about 20000 g/m²/day, from about 20000 g/m²/day to about 25000 g/m²/day, from about 25000 g/m²/day to about 30000 g/m²/day, or from about 30000 g/m²/day to about 40000 g/m²/day. In one embodiment, the article may have a moisture vapor transmission rate (MVTR) that is greater than about 40000 g/m²/day.

In one embodiment, the article may have permeability to DFP (simulate for sarin) that is less than about 50 micrograms/24 hours. In one embodiment, the article may have a permeability to DFP (simulate for sarin) in a range of from about 1 microgram/24 hours to about 5 micrograms/24 hours, from about 5 micrograms/24 hours to about 10 micrograms/24 hours, from about 10 micrograms/24 hours to about 20 micrograms/24 hours, from about 20 micrograms/24 hours to about 30 micrograms/24 hours, or from about 30 micrograms/24 hours to about 40 micrograms/24 hours, or from about 40 micrograms/24 hours to about 50 micrograms/24 hours. In one embodiment, the article may have permeability to a DFP (simulate for sarin) that is less than about 1 microgram/24 hours. In one embodiment, the article may have permeability to a chemical or microbial agent that is less than that toxicity level for a particular chemical or microbial agent.

The performance characteristics of an article may also be characterized by one or more of the chemical, biological, radiological and/or microbial agent deactivation rate. In one embodiment, the article may show a deactivation rate for a chemical, biological, radiological and/or microbial agent in a range of about 2 g/hr/m². In one embodiment, the article may show a deactivation rate for a chemical, biological, radiological, and/or microbial agent in a range from about 2 g/hr/m² to about 3 g/hr/m², from about 3 g/hr/m² to about 4 g/hr/m², or from about 4 g/hr/m² to about 5 g/hr/m². In one embodiment, the article may show a deactivation rate for a chemical, biological, radiological and/or microbial agent in a range that is greater about 5 g/hr/m².

In one embodiment, at a dosing level of 10 g/m², the article may exhibit greater than about 5 percent deactivation after a 24-hour period. In one embodiment, at a dosing level of 10 g/m², the article may exhibit percentage deactivation in a range of from about 5 percent to about 10 percent, from about 10 percent to about 20 percent, from about 20 percent to about 30 percent, from about 30 percent to about 40 percent, from about 40 percent to about 50 percent, from about 50 percent to about 60 percent, from about 60 percent to about 70 percent, from about 70 percent to about 80 percent, from about 80 percent to about 90 percent, or from about 90 percent to about 95 percent after a 24 hour period. In one embodiment, at a dosing level of 10 g/m², the article may exhibit about 100 percent deactivation after a 24-hour period.

In one embodiment, the article may exhibit a breach time to an unreacted chemical, biological, radiological and/or microbial agent in a range that is greater than about 30 minutes. In one embodiment, the article may exhibit a breach time to an unreacted chemical, biological, radiological and/or microbial agent in a range of from about 30 minutes to about 1 hour, from about 1 hour to about 2 hours, from about 2 hours to about 3 hours, from about 3 hours to about 4 hours, from about 4 hours to about 6 hours, from about 6 hours to about 7 hours, from about 7 hours to about 8 hours, from about 8 hours to about 9 hours, or from about 9 hours to about 10 hours. In one embodiment, the article may exhibit a breach time to an unreacted chemical, biological, radiological and/or microbial agent in a range that is greater than about 10 hours.

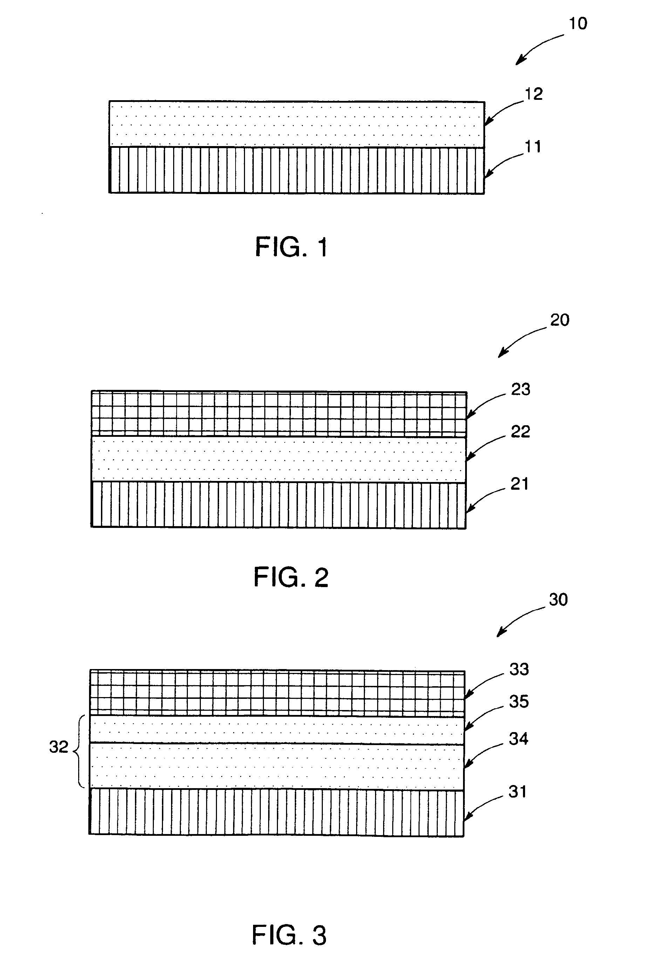

In one embodiment, the first selectively permeable coating 12 may include a single layer supported on a porous membrane 11 to form an article 10 as shown in Fig. 1. Here and throughout the specification and claims, the various representations of the article and/or laminate structure are merely representative and do not show all the possible embodiments of the inventions. In the embodiment shown in Fig. 1, the component protective against delamination is an element of first selectively permeable coating 12. The first selectively permeable coating may have a thickness and/or weight in a range as described hereinabove. In an alternate embodiment, the first selectively permeable coating may include two or more layers having a combined thickness and/or weight in a range as described hereinabove. At least one layer in the first selectively permeable coating may include the antichemical, antibiological, antiradiological, and/or antimicrobial agent. In this embodiment, the component protects the first selectively permeable coating 12 from delamination from porous membrane 11.

In another embodiment, the component may be an element of, or may comprise substantially the entirety of, a second selectively permeable layer 23 as shown in Fig. 2. In this embodiment, second selectively permeable layer 23 substantially overlies first selectively permeable layer 22. First selectively permeably layer 22 includes at least one antichemical, antibiological, antiradiological and/or antimicrobial agent.

In one embodiment, a first selectively permeable coating may include a plurality of thin layers instead of a single thick layer, wherein each layer in the plurality of layers may include the antichemical, antibiological, antiradiological, and/or antimicrobial agent. Fig. 3 shows an article 30 with a selectively permeable coating 32 supported on a membrane 31, wherein the first selectively permeable coating includes two layers 34 and 35, each having at least one antichemical, antibiological, antiradiological and/or antimicrobial agent. In one embodiment, a selectively permeable coating may include a plurality of thin layers having the same thickness. In an alternate embodiment, a selectively permeable coating may include a plurality of thin layers having a range of thicknesses and/or weight depending on the end use application and the method employed for deposition of the selectively permeable coating on the membrane. In this embodiment, the protective component is shown as an element, or substantially the entirety of, second selectively permeable layer 33, although the protective component may also be included in either or both of layers 34 or 35.

In one embodiment, a laminate is provided. The laminate may include an article as described hereinabove and an oleophobic membrane. The article may be supported on the oleophobic membrane. In one embodiment, the oleophobic membrane may refer to a membrane that is resistant to contamination by absorbing or adsorbing oils, greases or body fluids, such as perspiration and certain other contaminating agents. In one embodiment, the oleophobic membrane may be gas permeable, liquid penetration resistant and capable of moisture vapor transmission at a rate of at least 70,000 g/m²/day.

In one embodiment, an oleophobic membrane may include a plurality of interconnecting pores extending through the membrane and made from a material that tends to absorb oils and certain contaminating surfactants, for example ePTFE. A coating may be disposed on surfaces of the nodes and fibrils defining the interconnecting passages in the membrane. The coating may include oleophobic fluoropolymer solids coalesced on surfaces of the nodes and fibrils to provide oil and surfactant resistance to the resultant oleophobic membrane without completely blocking pores in the membrane.

Suitable oleophobic fluoropolymer solids may include an acrylic-based polymer with fluorocarbon side chains and a relatively small amount of water, water-soluble cosolvent and glycol. In one embodiment, suitable oleophobic fluoropolymer solids may include Zonyl family of fluorine containing polymers (available from CIBA Specialty Chemicals). In an alternative embodiment, suitable oleophobic fluoropolymer solids may include fluoropolymers commercially available under the trade name of TLF-8868, TLF-9312, TLF-9373, TLF-9404A and TLF-9494B (available from DuPont).

In one embodiment, the oleophobic membrane may be formed by wetting the surface of the pores with a diluted and stabilized dispersion of oleophobic fluoropolymer solids. The oleophobic fluoropolymer solids of the dispersion may be then coalesced on surfaces that define pores in the membrane. In one embodiment, the oleophobic membrane may be commercially available under the trade name of eVENT (from BHA Technologies, MO).

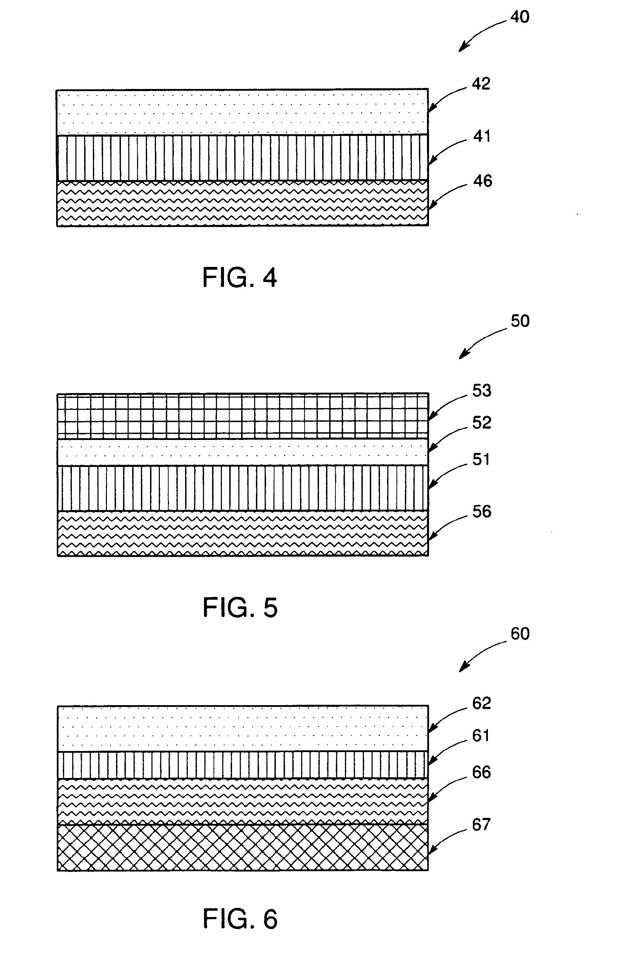

In one embodiment, the first selectively permeable coating 42 may be supported on a membrane 41, which may, in turn, be supported on an oleophobic membrane 46 as shown in Fig. 4 to form a laminate 40. In this embodiment, the protective component is an element of the first selectively permeable coating 42, e.g., a hydroxyalkyl-substituted polyethyleneimine. Although Fig. 4 shows only one selectively permeable coating 42, multiple layers of selectively permeable coatings may be possible in the laminate structure 40. For example, the protective component may be provided as an element, or comprise substantially the entirety of, a second selectively permeable coating, as shown in Fig. 5.

More specifically, Fig. 5 shows a laminate 50 comprising first selectively permeable coating 52 supported on a membrane 51. Membrane 51 is supported on oleophobic membrane 56. Second selectively permeable coating 53, comprising the protective component, substantially overlies first selectively permeable coating 52. Although shown as one layer, first selectively permeable coating 52 may include a plurality of layers wherein at least one layer in the plurality may include the antimicrobial agent.

In one embodiment, a laminate may include a shell layer selected from one or more of a fabric, a membrane, or a film. Fig. 6 shows a laminate 60 containing first selectively permeable coating 62 supported on a membrane 61, which is supported on a first surface of an oleophobic membrane 66. In the embodiment shown in Fig. 6, the protective component is an element of the first selectively permeable coating 62. A shell layer 67 is supported on the second surface of the oleophobic membrane 66.

In one embodiment, a shell layer may include one or more fabric layers. In one embodiment, a fabric layer may be sufficiently flexible, pliable and durable for use in articles of apparel or enclosures such as garments, tents, sleeping bags, casualty bags, and the like.

In one embodiment, the one or more fabric layers may include a polymer selected from poly(aliphatic amide), poly(aromatic amide), polyester, polyolefin, wool, cellulose based fibers such as cotton, rayon, linen, cellulose acetate and other modified cellulose, polyurethane, acrylics, methacrylics, or a blend comprising any of the above. In one embodiment, the one or more fabric layers may include cotton, poly (aliphatic amide), poly (aromatic amide), polyester, polyurethanes, or blends thereof.

In some embodiments, the one or more fabric layers may be made of woven fabric. In alternate embodiments, the one or more fabric layers may be made of a non-woven fabric. A non-woven fabric may be knit, braided, tufted, or felted.

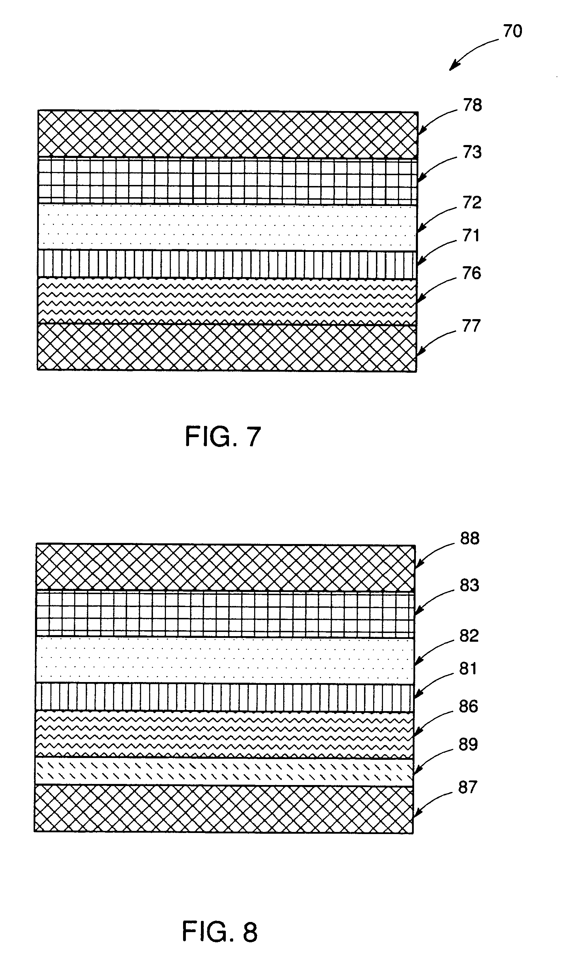

In one embodiment, a laminate may include an article as described herein, an oleophobic membrane, and at least two fabric materials. The two fabric layers may include the same fabric material or may include different fabric layers. In one embodiment, a laminate 70 may include an outer fabric layer 78 and an inner fabric layer 77 as shown in Fig. 7. The first selectively permeable coating 72 is supported on the membrane 71, which is supported on the oleophobic membrane 76. The second selectively permeable coating 73, comprising the component protective against delamination, substantially overlies first selectively permeable coating 74 and the resulting structure is sandwiched between the outer fabric layer 78 and the inner fabric layer 77. Although Fig. 7 shows only one selectively permeable membrane, multiple layers of selectively permeable membranes may be possible in the laminate structure 80.

An outer fabric layer is the outermost layer of the laminate, which is exposed to the elements. In one embodiment, an outer fabric layer may be woven fabric made of poly(aliphatic amide), poly (aromatic amide), polyester, acrylic, cotton, wool and the like. In one embodiment, the outer fabric layer may be treated to render it hydrophobic or oleophobic. In one embodiment, an inner fabric may be a knit, woven or non-woven fabric, and may be treated to enhance moisture wicking properties or to impart hydrophobic or oleophobic properties.

In some embodiments, the fabric layers may be treated with suitable materials so as to impart properties such as flame resistance, anti static properties, ultra-violet radiation resistance, controlled infrared (I. R.) reflectance, camouflage, and the like.

In one embodiment, a laminate may include one or more additional layers, for example, one or more of a hydrophilic membrane layer, an oleophobic membrane layer, or a porous membrane layer. Fig. 8 shows a laminate 80 in accordance with one embodiment of the invention. The first selectively permeable coating 82 is supported on the membrane 81, which is supported on the oleophobic membrane 86. The protective component is an element, or comprises substantially the entirety of, the second selectively permeable coating 83, which substantially overlies the first selectively permeable coating 82. A first additional layer 89 is present between the oleophobic membrane 86 and the inner fabric layer 87. The first additional layer 89 may be a hydrophilic membrane, an oleophobic membrane, or a microporous membrane. Although only one such additional layer is shown, multiple additional layers may be possible in laminate structure 80. The resulting structure is sandwiched between the outer fabric layer 88 and the inner fabric layer 87.

In one embodiment, at least one layer in the laminate may include one or more of an enzymatically-active material, catalytically active material, or a chemical-sorbing material. The enzymatically-active material, the catalytically active material, or a chemical-sorbing material may be present in any layer of the laminate structures. For example, the enzymatically-active material, the catalytically active material, or a chemical-sorbing material may be present in one or more of the selectively permeable coating, the hydrophilic membrane, the oleophobic membrane, the outer fabric layer, the inner fabric layer, or other suitable layers. In some embodiments, different layers in the laminate may include the enzymatically-active material, the catalytically active material, or a chemical-sorbing material independently. For example, an outer fabric layer may include an enzymatically-active material, an inner fabric layer may include a chemical-sorbing material, and a selectively permeable coating may include catalytically active particles.

In one embodiment, the laminate may comprise protective apparel. In one embodiment, the article may be supported on one or more fabric layers to form the protective apparel, as described hereinabove. In one embodiment, the protective apparel may be capable of transmitting moisture vapor and may reduce the exposure of a person to harmful chemical, biological, radiological and/or microbial agents. In one embodiment, the protective apparel may reduce the exposure of a person to harmful chemical, biological, radiological and/or microbial agents by reducing the activity of the chemical, biological, radiological and/or microbial agent or increasing an amount of time for a significant amount of the chemical, biological, radiological or microbial agent to pass through the agent protective apparel.

In one embodiment, the protective apparel may include outerwear. In one embodiment, the protective apparel may include outerwear having an outward facing surface capable of abrasion resistance. Outerwear may include one or more of jackets, tops, shirts, pants, hoods, gloves, coveralls, and the like. In one embodiment, the chemical or microbial agent protective apparel may include a decontamination suit.

In one embodiment, the protective apparel may include innerwear capable of being worn against exposed skin. In one embodiment, a chemical or microbial agent may include innerwear capable of being worn in fluid communication with skin. In one embodiment, the chemical or microbial agent protective apparel may include footwear including, socks, shoes, boots, and the like. In other embodiments, an article as described hereinabove may be employed in protective enclosures such as tents, sleeping bags, casualty bags, shelters and the like.

In one embodiment, a method according to claim 8 is provided. A method includes application of a first selectively permeable coating to a porous membrane. The first selectively permeable coating includes an antichemical, antibiological, antiradiological and/or antimicrobial agent. The agent is present in an amount that is sufficient to react with a chemical, biological, radiological or microbial agent to reduce the activity of the chemical, biological, radiological and/or microbial agent or increase an amount of time for a significant amount of the chemical, biological, radiological and/or microbial agent to pass through the article. A component protective against the delamination of the first selectively permeable coating from the porous membrane is also applied, either alone, or as an element of the first, or a second, selectively permeable coating.

In one embodiment, the first and/or second (if present) selectively permeable coating may be applied to the membrane by a coating technique, for example, dip-coating, slot-die coating, rod-coating, gravure coating, and the like. In one embodiment, the selectively permeable coating(s) may be incorporated into the porous membrane by adding a solution of the antichemical, antibiological, antiradiological and/or antimicrobial agent and/or protective component to the membrane fabrication process. In embodiments involving a plurality of layers combined to form the selectively permeable coating(s), the different layers may be applied to the membrane in series or the selectively permeable coating(s) may be prefabricated and then laminated to the porous membrane.

In some embodiments, the selectively permeable coating(s) may be made to coat or cover a porous membrane, essentially residing on the surface using the methods disclosed herein. In alternate embodiments, the selectively permeably coating(s) may additionally be made to imbibe into a membrane or membranes, through the membrane thickness, either to a very little extent or such an extent that the selectively permeable coating(s) substantially coats the pores within a membrane through its entire thickness. In some embodiments, the selectively permeable coating(s) may be made to reside completely within such membrane pores, or only a portion of the selectively permeable coating(s) may be made to reside within the pores.

In one embodiment, a solution of the selectively permeable coating(s) may be applied to the membrane. A suitable solvent may be aqueous or non-aqueous depending on the solubility of the antichemical, antibiological, antiradiological and/or antimicrobial agent in the particular solvent. Suitable solvents may include aliphatic hydrocarbons, aromatic hydrocarbons, and compounds with hydrogen bond accepting ability, or solvents miscible with water. Suitable aliphatic and aromatic hydrocarbon compounds may include one or more of hexane, cyclohexane, and benzene, which may be substituted with one or more alkyl groups containing from 1-4 carbon atoms. Suitable compounds with hydrogen-bond accepting ability may include one or more of the following functional groups: hydroxyl groups, amino groups, ether groups, carbonyl groups, carboxylic ester groups, carboxylic amide groups, ureido groups, sulfoxide groups, sulfonyl groups, thioether groups, and nitrile groups. Suitable solvents may include one or more alcohols, amines, ethers, ketones, aldehydes, esters, amides, ureas, urethanes, sulfoxides, sulfones, sulfonamides, sulfate esters, thioethers, phosphines, phosphite esters, or phosphate esters. Some other examples of suitable non-aqueous solvents include toluene, hexane, acetone, methyl ethyl ketone, acetophenone, cyclohexanone, 4- hydroxy-4-methyl-2-pentanone, isopropanol, ethylene glycol, propylene glycol, diethylene glycol, benzyl alcohol, furfuryl alcohol, glycerol, cyclohexanol, pyridine, piperidine, morpholine, triethanolamine, triisopropanolamine, dibutylether, 2-methoxyethyl ether, 1,2- diethoxyethane, tetrahydrofuran, p-dioxane, anisole, ethyl acetate, ethylene glycol diacetate, butyl acetate, gamma-butyrolactone, ethyl benzoate, N-methylpyrrolidinone, N,N-dimethylacetamide, 1,1,3,3- tetramethylurea, thiophene, tetrahydrothiophene, dimethylsulfoxide, dimethylsulfone, methanesulfonamide, diethyl sulfate, triethylphosphite, triethylphosphate, 2,2'-thiodiethanol, acetonitrile, or benzonitrile. In one embodiment, a method may include removing any residual solvent from the membrane by air-drying, vacuum drying, heat drying, or combinations thereof.

In one embodiment, a method may include fabrication of a laminate that may be used, for example, in protective equipment and/or apparel. In one embodiment, the selectively permeable membrane(s) may be laminated to one or more layer of a membrane, a film, or an apparel fabric. In one embodiment the selectively permeable membrane(s) may be laminated to one or more layer of a hydrophilic membrane, an oleophobic membrane, an outer layer fabric, or an inner layer fabric. In one embodiment, lamination may be achieved by thermal bonding, hot roll lamination, ultrasonic lamination, adhesive lamination, forced hot air lamination, or by mechanical attachment such as stitches.

In one embodiment, a laminate may be fabricated using a seaming technique. A seaming technique may involve stitching or heat sealing the edges to be joined and then heat sealing the seam to the inside of the laminate. In one embodiment, the laminate may be fabricated using adhesives or stitching. Stitching if employed may be present throughout the layers such as in quilting, or point bonded non-woven materials, or may only be present at the seams or at the cuffs, for example in garments, gloves and other articles of clothing.

In one embodiment, a method may include contacting the article, laminate, protective equipment or protective apparel with a chemical, biological, radiological or microbial agent. In one embodiment, a method for reducing exposure of a person to one or more chemical, biological, radiological and/or microbial agents is provided. The method may include exposing a chemical, biological, radiological or microbial agent to a membrane having pores and a first selectively permeable coating. The method may include infiltrating the chemical, biological, radiological or microbial agent into the pores and reacting the chemical, biological, radiological or microbial agent with the antichemical, antibiological, antiradiological and/or antimicrobial agent.

In one embodiment, the method may include one or both of reducing the biological activity of the chemical, biological, radiological and/or microbial agent or increasing an amount of time for a significant amount of the chemical, biological, radiological and/or microbial agent to pass through the article, laminate or apparel. In one embodiment, a method may include reducing the biological activity of the chemical, biological, radiological or microbial agent by at least 80 percent. In one embodiment, a method may include increasing an amount of time for a significant amount of the chemical, biological, radiological or microbial agent to pass through the article by 1 hour.

In one embodiment, a method may include interposing between a person and a chemical, biological, radiological and/or microbial agent, chemical, biological, radiological or microbial agent protective apparel including a membrane that has preferential permeability towards water vapor relative to the chemical, biological, radiological and/or microbial agent.

### EXAMPLE 1

A 25 weight percent stock solution of ethoxylated polyethyleneimine is prepared in 2-propanol along with 20 weight percent of Cylink® 2000 crosslinking solution, available from Cytec Industries Inc. This solution is used to apply a coating onto an ePTFE membrane substrate at a coating level of 20 g/m² and cured for 10 minutes at 180 °C. A secondary layer of a microporous polyurethane is then applied over the initial treatment at a level of approximately 3g/m2 and sufficiently cured. The resulting architecture is subsequently laminated to a textile substrate and laundered multiple times without delamination.

The foregoing example is illustrative of some features of the invention. The appended claims are intended to claim the invention as broadly as has been conceived and the examples herein presented are illustrative of selected embodiments from a manifold of all possible embodiments. Accordingly, it is Applicants' intention that the appended claims not limit to the illustrated features of the invention by the choice of examples utilized. As used in the claims, the word "comprises" and its grammatical variants logically also subtend and include phrases of varying and differing extent such as for example, but not limited thereto, "consisting essentially of" and "consisting of." Where necessary, ranges have been supplied, and those ranges are inclusive of all sub-ranges there between. It is to be expected that variations in these ranges will suggest themselves to a practitioner having ordinary skill in the art and, where not already dedicated to the public, the appended claims should cover those variations. Advances in science and technology may make equivalents and substitutions possible that are not now contemplated by reason of the imprecision of language; these variations should be covered by the appended claims.

For completeness, various aspects of the disclosure are now set out in the following numbered clauses:
1. An article, comprising:
   a porous membrane;
   a first selectively permeable coating supported by the membrane and comprising an effective amount of an antichemical, antibiological, antiradiological and/or antimicrobial agent; and
   a component protective against delamination of the selectively permeable coating from the porous membrane and/or any other coatings applied thereto.
2. The article of clause 1, wherein the component comprises an element of the first selectively permeable coating.
3. The article of clause 1, wherein the component comprises an element of a second selectively permeable coating.
4. The article of clause 3, wherein the second selectively permeable coating coats substantially the entirety of the first selectively permeable coating.
5. The article of clause 1, wherein the component comprises an organic polymer.
6. The article of clause 5, wherein the component comprises one or more polyurethanes, polyallyamines, polyvinylamines, polyvinylalcohols, or copolymers or blends of these.
7. The article of clause 6, wherein the component comprises a copolymer of one or more polyvinylalcohols and one or more polyvinylamines.
8. The article of clause 1, wherein the membrane comprises one or more of polyalkene, polyarylene, polyamide, polyester, polysulfone, polyether, polyacrylic, polystyrene, polyurethane, polyarylate, polyimide, polycarbonate, polysiloxane, polyphenylene oxide, cellulosic polymer, or substituted derivatives thereof.
9. The article of clause 8, wherein the membrane comprises a fluorinated polymer.
10. The article of clause 9, wherein the fluorinated polymer comprises one or both of polyvinylidene fluoride or polytetrafluoroethylene.
11. The article of clause 10, wherein the fluorinated polyolefin comprises expanded polytetrafluoroethylene.
12. The article of clause 1, wherein the first selectively permeable coating comprises two or more layers, wherein at least one layer comprises at least one antimicrobial or antichembio agent.
13. The article of clause 12, wherein the first selectively permeable coating further comprises a polymeric component active against chemical, biological, radiological or antimicrobial agents.
14. The article of clause 13, wherein the polymeric component comprises a hydroxyalkyl-substituted polyalkyleneimine.
15. The article of clause 1, wherein the article has a permeability to a chemical biological or microbial agent that is less than about 20 micrograms/cm²/24 hours for DFP.
16. A laminate comprising the article as defined in clause 1 and at least one additional membrane.
17. An apparel comprising the laminate of clause 16, wherein the apparel comprises outerwear.
18. An apparel comprising the laminate of clause 16, wherein the apparel is capable of being worn against exposed skin.
19. A method comprising applying to a porous membrane (i) a first selectively permeable coating comprising an effective amount of an antimicrobial and/or an antichembio agent and (ii) a component protective against delamination of the selectively permeable coating from the porous membrane and/or any other coatings applied thereto.
20. The method of clause 19, wherein the component is also an element of the selectively permeable coating.
21. The article of clause 19, wherein the component is provided as an element of a second selectively permeable coating.
22. The article of clause 21, wherein the second selectively permeable coating coats substantially the entirety of the first selectively permeable coating.
23. The method of clause 19, wherein the first selectively permeable coating further comprises a polymeric component and the method further comprises curing the polymeric component.

## Claims

1. An article (10,20), comprising:
a porous membrane (11,21);
a first selectively permeable coating (12,22) supported by the membrane and comprising an effective amount of an antichemical, antibiological, antiradiological and/or antimicrobial agent; and
a component protective against delamination of the selectively permeable coating (12,22) from the porous membrane (11,21) and/or any other coatings applied thereto; **characterized in that** the component comprises an organic polymer selected from polyurethanes, polyallyamines, polyvinylamines, polyvinylalcohols or copolymers or blends of these.

2. The article (10,20) of claim 1, wherein the first selectively permeable (12,22) coating comprises the component protective against delamination.

3. The article (10,20) of claim 1 or claim 2, wherein the article comprises a second selectively permeable coating (23), wherein the second selectively permeable coating (23) comprises the component protective against delamination.

4. The article (10,20) of any preceding claim, wherein the first selectively permeable coating (12,22) comprises a polymeric component active against chemical, biological, radiological or microbial agents.

5. The article (10,20) of claim 4, wherein the polymeric component comprises a hydroxyalkyl-substituted polyalkyleneimine.

6. A laminate (40) comprising the article (10,20) as defined in any preceding claim, and at least one additional membrane (41).

7. An apparel item comprising the laminate (40) of claim 6, wherein the apparel comprises outerwear.

8. A method comprising applying to a porous membrane (11,21) (i) a first selectively permeable coating (12,22) comprising an effective amount of an antichemical, antibiological, antiradiological and/or an antimicrobial agent and (ii) a component protective against delamination of the selectively permeable coating (12,22) from the porous membrane (11,21) and/or any other coatings applied thereto, **characterized in that** the component comprises an organic polymer selected from polyurethanes, polyallyamines, polyvinylamines, polyvinylalcohols or copolymers or blends of these.

9. The method of claim 8, wherein the selectively permeable coating (12,22) comprises the component protective against delamination.

10. The method of claim 8 or claim 9, wherein the first selectively permeable coating (12,22) further comprises a polymeric component and the method further comprises curing the polymeric component.

## Patentansprüche

1. Gegenstand (10, 20), umfassend:
eine poröse Membran (11, 21);
einen ersten selektiv durchlässigen Überzug (12, 22), der von der Membran getragen ist und eine wirksame Menge eines antichemischen, antibiologischen, antiradiologischen und/oder antimikrobiellen Mittels umfasst, und
eine Komponente, die gegen Schichtentrennung des selektiv durchlässigen Überzuges (12, 22) von der porösen Membran (11, 21) und/oder irgendwelcher anderer darauf aufgebrachter Überzüge schützt;
**dadurch gekennzeichnet, dass** die Komponente ein organisches Polymer umfasst, ausgewählt aus Polyurethanen, Polyallylaminen, Polyvinylaminen, Polyvinylalkoholen oder Copolymeren oder Mischungen dieser.

2. Gegenstand (10, 20, nach Anspruch 1, worin der erste selektiv durchlässige Überzug (12, 22) die gegen Schichtentrennung schützende Komponente umfasst.

3. Gegenstand (10, 20) nach Anspruch 1 oder Anspruch 2, worin der Gegenstand einen zweiten selektiv durchlässigen Überzug (23) umfasst, wobei der zweite selektiv durchlässige Überzug (23) die gegen Schichtentrennung schützende Komponente umfasst.

4. Gegenstand (10, 20) nach irgendeinem vorhergehenden Anspruch, worin der erste selektiv durchlässige Überzug (12, 22) eine polymere Komponente umfasst, die aktiv gegen chemische, biologische, radiologische und mikrobielle Mittel ist.

5. Gegenstand (10, 20) nach Anspruch 4, worin die polymere Komponente ein hydroxyalkyl-substituiertes Polyalkylenimin umfasst.

6. Laminat (40), umfassend den Gegenstand (10, 20), wie er in irgendeinem vorhergehenden Anspruch definiert ist, und mindestens eine zusätzliche Membran (41).

7. Kleidungsstück, umfassend das Laminat (40) nach Anspruch 6, worin das Kleidungsstück Oberbekleidung umfasst.

8. Verfahren, umfassend das Aufbringen auf eine poröse Membran (11, 21) (i) eines ersten selektiv durchlässigen Überzuges (12, 22), umfassend eine wirksame Menge eines antichemischen, antibiologischen, antiradiologischen und/oder eines antimikrobiellen Mittels und (ii) einer Komponente, die gegen Schichtentrennung des selektiv durchlässigen Überzuges (12, 22) von der porösen Membran (11, 21) und/oder irgendwelcher anderer darauf aufgebrachter Überzüge schützt,
**dadurch gekennzeichnet, dass** die Komponente ein organisches Polymer umfasst, ausgewählt aus Polyurethanen, Polyallylaminen, Polyvinylaminen, Polyvinylalkoholen oder Copolymeren oder Mischungen dieser.

9. Verfahren nach Anspruch 8, worin der selektiv durchlässige Überzug (12, 22) die gegen Schichtentrennung schützende Komponente umfasst.

10. Verfahren nach Anspruch 8 oder Anspruch 9, worin der erste selektiv durchlässige Überzug (12, 22) weiter eine polymere Komponente umfasst und das Verfahren weiter das Härten der polymeren Komponente umfasst.

## Revendications

1. Article (10, 20) comprenant :
une membrane poreuse (11, 21) ;
un premier revêtement (12, 22) perméable de façon sélective supporté par la membrane et comportant une quantité efficace d'un agent anti-chimique, anti-biologique, anti-radiologique et/ou anti-microbien ; et
un composant protecteur à l'encontre du décollement du revêtement perméable de façon sélective (12, 22) d'avec la membrane poreuse (11, 21) et/ou d'avec n'importe lequel des autres revêtements appliqués sur celle-ci ;
**caractérisé en ce que** le composant comprend un polymère organique choisi parmi les polyuréthanes, les polyallylamines, les polyvinylamines, les alcools polyvinyliques ou bien des copolymères ou des mélanges de ceux-ci.

2. Article (10, 20) selon la revendication 1, dans lequel le premier revêtement perméable de façon sélective (12, 22) comprend le composant protecteur à l'encontre du décollement.

3. Article (10, 20) selon la revendication 1 ou 2, l'article comprenant un deuxième revêtement (23) perméable de façon sélective, le deuxième revêtement (23) perméable de façon sélective comprenant le composant protecteur à l'encontre du décollement.

4. Article (10, 20) selon l'une quelconque des revendications qui précèdent, dans lequel le premier revêtement (12, 22) perméable de façon sélective comprend un composant polymère actif à l'encontre des agents chimiques, biologiques, radiologiques ou microbiens.

5. Article (10, 20) selon la revendication 4, dans lequel le composant polymère comprend une polyalkylèneimine substituée par l'hydroxyalkyle.

6. Lamellé (40) comprenant l'article (10, 20) tel que défini dans l'une quelconque des revendications qui précèdent, et au moins une membrane additionnelle (41).

7. Article du type vêtement comprenant le lamellé (40) selon la revendication 6, dans lequel le vêtement constitue un vêtement d'extérieur.

8. Procédé comprenant l'application sur une membrane poreuse (11, 21)
(i) d'un premier revêtement (11, 22) perméable de façon sélective comportant une quantité efficace d'un agent anti-chimique, anti-biologique, anti- radiologique et/ou anti-microbien et
(ii) un composant protecteur à l'encontre du décollement du revêtement (12, 22) perméable de façon sélective d'avec la membrane poreuse (11, 21) et/ou d'avec n'importe lequel des autres revêtements appliqués sur celle-ci, **caractérisé en ce que** le composant comprend un polymère organique choisi parmi les polyuréthanes, les polyallylamines, les polyvinylamines, les alcools polyvinyliques ou bien des copolymères ou des mélanges de ceux-ci.

9. Procédé selon la revendication 8, dans lequel le revêtement (12, 22) perméable de façon sélective comprend le composant protecteur à l'encontre du décollement.

10. Procédé selon la revendication 8 ou 9, dans lequel le premier revêtement (12, 22) perméable de façon sélective comprend en outre un composant polymère, et le procédé comprenant en outre le durcissement du composant polymère.
